# EUROPEAN PATENT APPLICATION

(11) **EP 4 687 339 A1**
(43) Date of publication of application: **04.02.2026**
(21) Application number: 25192151.6
(22) Date of filing: 28.07.2025
(51) Int. Cl.: H04N 5/272, H04N 5/222, H04N 23/63

(54) **IMAGE PROCESSING DEVICE, IMAGING APPARATUS, IMAGE PROCESSING METHOD, AND PROGRAM**

(30) Priority: 29.07.2024 JP 2024122605
(71) Applicant: FUJIFILM Corporation, Tokyo 106-8620 (JP)
(72) Inventor: MIZUKAMI, Hiroyuki, Saitama (JP); OSHIMA, Hiroyuki, Saitama (JP); YOSHIDA, Momoko, Saitama (JP); SHIMURA, Ayaha, Saitama (JP); YOSHIDA, Masako, Saitama (JP)
(74) Representative: Meissner Bolte Partnerschaft mbB

(57) **Abstract**

Provided are an image processing device, an imaging apparatus, an image processing method, and a program capable of providing a user with an image useful for three-dimensional decoration.

An image processing device (40) includes a processor (40A). The processor (40A) is configured to acquire distance information (78) related to a distance from an imaging apparatus (10, 160) to a subject (14). The processor (40A) is configured to output a composite image (96) obtained by combining a live view image (74B) obtained by capturing the subject (14) with the imaging apparatus (10, 160) and an object (98) defined in three dimensions based on at least the distance information (78).

## Description

### BACKGROUND OF THE INVENTION

### 1. Field of the Invention

The present disclosure relates to an image processing device, an imaging apparatus, an image processing method, and a program.

### 2. Description of the Related Art

JP2022-102923A discloses a virtual studio system that creates a video in which a real subject and a background of a three-dimensional virtual space are combined. The invention disclosed in JP2022-102923A comprises a camera that images a real subject, a camera tracker that is fixed to the camera and detects a position and an orientation of the camera, and outputs a camera movement signal, a rendering unit that renders an image of a three-dimensional virtual space, a virtual camera that is disposed in the three-dimensional virtual space, has parameters of a position, an orientation, and an angle of view, controls its position and orientation parameters in accordance with the position and the orientation of the camera based on the camera movement signal output by the camera tracker, and specifies a projection range based on its position, orientation, and angle of view parameters, and a combining unit that generates a composite video in which an image of the subject imaged by the camera and an image of the projection range in the three-dimensional virtual space are combined.

### SUMMARY OF THE INVENTION

One embodiment according to the present disclosure provides an image processing device, an imaging apparatus, an image processing method, and a program capable of providing a user with an image useful for three-dimensional decoration.

A first aspect according to the present disclosure is an image processing device comprising: a processor, in which the processor is configured to acquire distance information related to a distance from an imaging apparatus to a subject, and output a composite image obtained by combining a live view image obtained by capturing the subject with the imaging apparatus and an object defined in three dimensions based on at least the distance information.

A second aspect according to the present disclosure is the image processing device according to the first aspect, in which the object includes a photo booth.

A third aspect according to the present disclosure is the image processing device according to the first or second aspect, in which a reference surface included in the subject is shown in the live view image, and the composite image is an image in which the object is positioned on an installation surface determined based on the reference surface.

A fourth aspect according to the present disclosure is the image processing device according to the third aspect, in which an installation location of the object is determined according to a received operation.

A fifth aspect according to the present disclosure is the image processing device according to the third or fourth aspect, in which the installation surface is a divided surface selected in accordance with a given instruction among a plurality of divided surfaces obtained by dividing the reference surface.

A sixth aspect according to the present disclosure is the image processing device according to any one of the third to fifth aspects, in which the reference surface is recognized by performing physical object recognition processing on the live view image.

A seventh aspect according to the present disclosure is the image processing device according to the sixth aspect, in which the reference surface is a surface having a feature recognized by performing the physical object recognition processing on the live view image.

An eighth aspect according to the present disclosure is the image processing device according to any one of the first to seventh aspects, in which the object in the composite image is changed according to a first condition.

A ninth aspect according to the present disclosure is the image processing device according to the eighth aspect, in which the first condition includes a first change instruction that is an instruction to change the object.

A tenth aspect according to the present disclosure is the image processing device according to the eighth or ninth aspect, in which the first condition includes a state of the subject shown in the live view image.

An eleventh aspect according to the present disclosure is the image processing device according to any one of the first to tenth aspects, in which the processor is configured to output an augmented reality image, the augmented reality image is an image obtained by combining the live view image and at least one virtual space determined based on a geometric characteristic of the object, and the virtual space includes a virtual three-dimensional object.

A twelfth aspect according to the present disclosure is the image processing device according to the eleventh aspect, in which the three-dimensional object is changed according to a second condition.

A thirteenth aspect according to the present disclosure is the image processing device according to the twelfth aspect, in which the second condition includes a second change instruction that is an instruction to change the three-dimensional object.

A fourteenth aspect according to the present disclosure is the image processing device according to the twelfth or thirteenth aspect, in which the second condition includes a state of the subject shown in the live view image.

A fifteenth aspect according to the present disclosure is the image processing device according to any one of the eleventh to fourteenth aspects, in which the augmented reality image includes, as the virtual space, one or more background virtual spaces in which a background of a physical object shown in the live view image is representable and one or more foreground virtual spaces in which a foreground of the physical object shown in the live view image is representable, the one or more background virtual spaces include a background three-dimensional object as the three-dimensional object, and the one or more foreground virtual spaces include a foreground three-dimensional object as the three-dimensional object.

A sixteenth aspect according to the present disclosure is the image processing device according to the fifteenth aspect, in which pseudo-optical characteristics by which the background three-dimensional object and the foreground three-dimensional object mutually influence are represented in the background three-dimensional object and the foreground three-dimensional object.

A seventeenth aspect according to the present disclosure is the image processing device according to any one of the eleventh to sixteenth aspects, in which the three-dimensional object includes a dynamic three-dimensional object that is dynamically represented.

An eighteenth aspect according to the present disclosure is the image processing device according to any one of the eleventh to seventeenth aspects, in which a physical object shown in the live view image and the three-dimensional object are represented by occlusion based on the distance information.

A nineteenth aspect according to the present disclosure is the image processing device according to any one of the eleventh to eighteenth aspects, in which processing is executed on the virtual space and/or the three-dimensional object in response to a processing execution instruction given by each of a plurality of terminal devices.

A twentieth aspect according to the present disclosure is the image processing device according to any one of the first to nineteenth aspects, in which the object is updated accordingly in a case in which the live view image is obtained.

A twenty-first aspect according to the present disclosure is the image processing device according to any one of the first to twentieth aspects, in which the output of the composite image is realized by displaying the composite image on a screen.

A twenty-second aspect according to the present disclosure is the image processing device according to any one of the first to twenty-first aspects, in which reproduction information for reproducing an image including the object is stored in a storage medium, and in a case in which a reproduction condition is satisfied, the image including the object is reproduced based on the reproduction information stored in the storage medium.

A twenty-third aspect according to the present disclosure is the image processing device according to any one of the first to twenty-second aspects, in which the composite image is an image realized by augmented reality.

A twenty-fourth aspect according to the present disclosure is the image processing device according to any one of the first to twenty-third aspects, in which the distance information is obtained by performing image analysis on an image obtained by capturing the subject with the imaging apparatus.

A twenty-fifth aspect according to the present disclosure is the image processing device according to any one of the first to twenty-fourth aspects, in which the imaging apparatus is provided with a distance-measuring sensor that measures the distance.

A twenty-sixth aspect according to the present disclosure is an imaging apparatus comprising: the image processing device according to any one of the first to twenty-fifth aspects; and an image sensor that images the subject.

A twenty-seventh aspect according to the present disclosure is an image processing method comprising: acquiring distance information related to a distance from an imaging apparatus to a subject; and outputting a composite image obtained by combining a live view image obtained by capturing the subject with the imaging apparatus and an object defined in three dimensions based on at least the distance information.

A twenty-eighth aspect according to the present disclosure is a program for causing a computer to execute: acquiring distance information related to a distance from an imaging apparatus to a subject; and outputting a composite image obtained by combining a live view image obtained by capturing the subject with the imaging apparatus and an object defined in three dimensions based on at least the distance information.

### BRIEF DESCRIPTION OF THE DRAWINGS

Fig. 1 is a schematic perspective view showing an example of a usage aspect of a smart device.
Fig. 2 is a rear perspective view showing an example of an appearance of a rear side of the smart device.
Fig. 3 is a schematic perspective view showing an example of a structure of a photoelectric conversion element included in the smart device.
Fig. 4 is a front perspective view showing an example of an appearance of a front side of the smart device shown in Fig. 2.
Fig. 5 is a block diagram showing an example of a configuration of an electrical hardware of the smart device.
Fig. 6 is a block diagram showing an example of storage contents of a storage included in the smart device and an example of main functions of a processor.
Fig. 7 is a conceptual diagram showing an example of an aspect in which an imaging region is imaged by a distance-measuring imager included in the smart device and a first live view image is obtained.
Fig. 8 is a conceptual diagram showing an example of an aspect in which distance measurement is performed on a subject by the distance-measuring imager included in the smart device and a distance image based on a distance measurement result is obtained.
Fig. 9 is a conceptual diagram showing an example of processing contents in which a second live view image is generated by a controller and a flat surface shown in the second live view image is recognized by a recognition unit.
Fig. 10 is a conceptual diagram showing an example of processing contents in which the controller divides the flat surface to obtain a plurality of divided surfaces.
Fig. 11 is a conceptual diagram showing an example of an aspect in which the second live view image and the plurality of divided surfaces are displayed on a screen.
Fig. 12 is a conceptual diagram showing an example of an aspect in which one divided surface is selected by a user from the plurality of divided surfaces.
Fig. 13 is a conceptual diagram showing an example of an aspect in which a composite image is generated by the controller and the composite image is displayed on the screen.
Fig. 14 is a conceptual diagram showing a form example in which a geometric characteristic of a photo booth is changed in response to a booth change instruction.
Fig. 15 is a conceptual diagram showing an example of an aspect in which the photo booth is determined in response to a determination instruction, and reproduction information is generated and stored in the storage on a condition in which the photo booth is determined.
Fig. 16 is a conceptual diagram showing an example of an aspect in which the photo booth is reproduced based on the reproduction information.
Fig. 17 is a conceptual diagram showing an example of an aspect in which a person is located in the photo booth shown in the composite image.
Fig. 18 is a conceptual diagram showing an example of an aspect in which an augmented reality image including a foreground virtual space and a background virtual space determined with the photo booth as a reference is generated and displayed on the screen.
Fig. 19 is a conceptual diagram showing an example of a positional relationship between the photo booth, the foreground virtual space, and the background virtual space.
Fig. 20 is a conceptual diagram showing an example of an aspect in which a foreground three-dimensional object is disposed in the foreground virtual space.
Fig. 21 is a conceptual diagram showing an example of an aspect in which the foreground three-dimensional object disposed in the foreground virtual space is changed.
Fig. 22 is a conceptual diagram showing an example of an aspect in which a background three-dimensional object is disposed in the background virtual space.
Fig. 23 is a conceptual diagram showing an example of an aspect in which the background three-dimensional object disposed in the background virtual space is changed.
Fig. 24 is a conceptual diagram showing an example of an aspect in which an augmented reality image is generated by combining the foreground three-dimensional object disposed in the foreground virtual space, the second live view image, and the background three-dimensional object disposed in the background virtual space, and the augmented reality image is displayed on the screen.
Fig. 25 is a conceptual diagram showing an example of contents of occlusion processing.
Fig. 26 is a conceptual diagram showing an example of an aspect in which an augmented reality image is generated by combining the foreground three-dimensional object disposed in the foreground virtual space, a main exposure image, and the background three-dimensional object disposed in the background virtual space, and the augmented reality image is output to a predetermined output destination.
Fig. 27 is a flowchart showing an example of a flow of imaging control processing.
Fig. 28 is a conceptual diagram showing an example of an aspect in which a geometric characteristic (size in the example shown in Fig. 28) of the photo booth is changed depending on a state of a subject (a person in the example shown in Fig. 28).
Fig. 29 is a conceptual diagram showing an example of an aspect in which an augmented reality image using a background three-dimensional object according to a person's expression is generated.
Fig. 30 is a conceptual diagram showing an example of an aspect in which pseudo-optical characteristics (for example, specular reflection and/or projection) by which the background three-dimensional object and the foreground three-dimensional object mutually influence are represented on the background three-dimensional object and the foreground three-dimensional object.
Fig. 31 is a conceptual diagram showing an example of a positional relationship between the photo booth, the foremost virtual space, the foreground virtual space, and the background virtual space.
Fig. 32 is a conceptual diagram showing an example of an aspect in which an augmented reality image is generated by combining a dynamic three-dimensional object disposed in the foremost virtual space, the foreground three-dimensional object disposed in the foreground virtual space, the second live view image, and the background three-dimensional object disposed in the background virtual space, and the augmented reality image is displayed on the screen.
Fig. 33 is a conceptual diagram showing an example of an aspect in which a distance image is generated by AI-based image analysis.
Fig. 34 is a conceptual diagram showing an example of an aspect in which the foreground three-dimensional object and the background three-dimensional object are edited in response to an editing instruction given to each of a plurality of smart devices.
Fig. 35 is a schematic configuration diagram showing an example of a configuration of an imaging system.

### DESCRIPTION OF THE PREFERRED EMBODIMENTS

Hereinafter, an example of an embodiment of an image processing device, an imaging apparatus, an image processing method, and a program according to the present disclosure will be described with reference to the accompanying drawings. The present disclosure can also be applied to a program and a computer program product.

First, terms used in the following description will be described.

CPU is an abbreviation for "central processing unit". GPU is an abbreviation for "graphics processing unit". GPGPU is an abbreviation for "general-purpose computing on graphics processing units". APU is an abbreviation for "accelerated processing unit". TPU is an abbreviation for "tensor processing unit". RAM is an abbreviation for "random access memory". EEPROM is an abbreviation for "electrically erasable programmable read-only memory". ASIC is an abbreviation for "application specific integrated circuit". PLD is an abbreviation for "programmable logic device". FPGA is an abbreviation for "field-programmable gate array". SoC is an abbreviation for "system-on-a-chip". SSD is an abbreviation for "solid state drive". USB is an abbreviation for "universal serial bus". LD is an abbreviation for "laser diode". EL is an abbreviation for "electro-luminescence". UI is an abbreviation for "user interface". I/F is an abbreviation for "interface". TOF is an abbreviation for "time of flight". AI is an abbreviation for "artificial intelligence". CG is an abbreviation for "computer graphics". LAN is an abbreviation for "local area network". WAN is an abbreviation for "wide area network". 5G is an abbreviation for "5th generation mobile communication system".

In the following description, a processor with a reference numeral (hereinafter, simply referred to as a "processor") may be one computing device or a combination of a plurality of computing devices. In addition, the processor may be one type of computing device or a combination of a plurality of types of computing devices. Examples of the computing device include a CPU, a GPU, a GPGPU, an APU, and a TPU.

In the following description, a memory with a reference numeral is a memory such as a RAM that temporarily stores information, and is used as a work memory by the processor.

In the following description, a storage with a reference numeral is one or a plurality of non-volatile storage devices that store various programs, various parameters, and the like. Examples of the non-volatile storage device include a flash memory, a magnetic disk, and a magnetic tape. Examples of the storage also include a cloud storage.

In the following embodiment, an external I/F with a reference numeral controls transmission and reception of various types of information between a plurality of devices connected to each other. An example of the external I/F is a USB interface. A communication I/F including a communication processor, an antenna, and the like may be applied to the external I/F. The communication I/F controls communication between a plurality of computers. Examples of a communication standard applied to the communication I/F include a wireless communication standard including 5G, Wi-Fi (registered trademark), and Bluetooth (registered trademark).

In the following embodiment, "A and/or B" is synonymous with "at least one of A or B". That is, "A and/or B" may refer to A alone, B alone, or a combination of A and B. In addition, in the present specification, in a case in which three or more matters are expressed with the connection of "and/or", the same concept as "A and/or B" is applied.

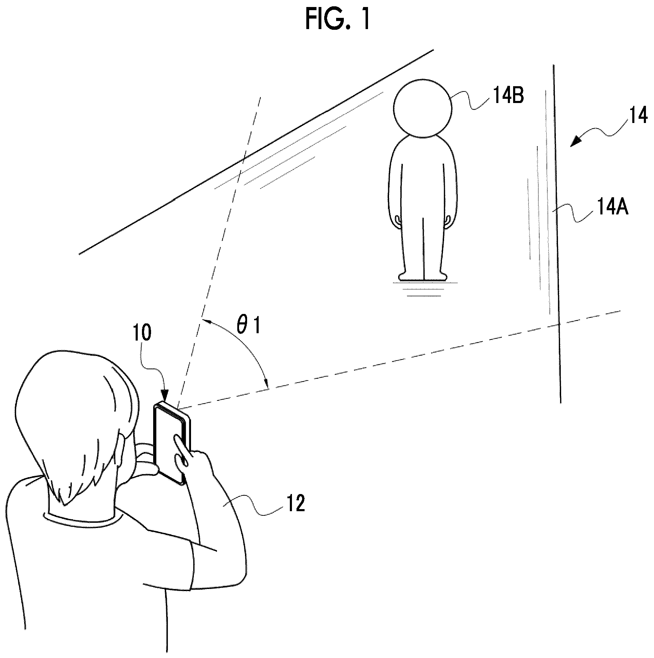

As shown in Fig. 1 as an example, a smart device 10 performs an imaging operation of imaging a subject 14 within an angle of view θ1 (hereinafter, also simply referred to as an "imaging operation") and a distance measurement operation of irradiating the subject 14 with laser light and receiving reflected light of the laser light from the subject 14 to perform distance measurement (hereinafter, also simply referred to as a "distance measurement operation"), in response to an instruction given by a user 12.

In the present embodiment, the term "distance measurement" refers to processing of measuring a distance from the smart device 10 to the subject 14. In the example shown in Fig. 1, a subject including a flat surface 14A and a person 14B on the flat surface 14A is shown as the subject 14. Examples of the smart device 10 include a smartphone, a smartwatch, smart glasses, and a tablet terminal. In the present embodiment, the smart device 10 is an example of an "imaging apparatus" according to the present disclosure. In addition, in the present embodiment, the subject 14 is an example of a "subject" according to the present disclosure.

In the present embodiment, the smart device 10 is exemplified, but this is merely an example, and the present disclosure is established even in a case of an instant camera, a compact camera, a mirrorless single-lens camera, a digital single-lens reflex camera, or the like. In addition, the present disclosure is established even in a case of a device in which an imaging function and a printing function are integrated instead of the smart device 10. An example of the device in which the imaging function and the printing function are integrated is a hybrid instant camera (for example, a camera equipped with a plurality of functions in which an image obtained by imaging is displayed on a screen, an image obtained by imaging is recorded on a recording medium such as a memory card, editing and/or processing is performed on an image displayed on a screen in response to an instruction from a user, and an image designated by a user is printed).

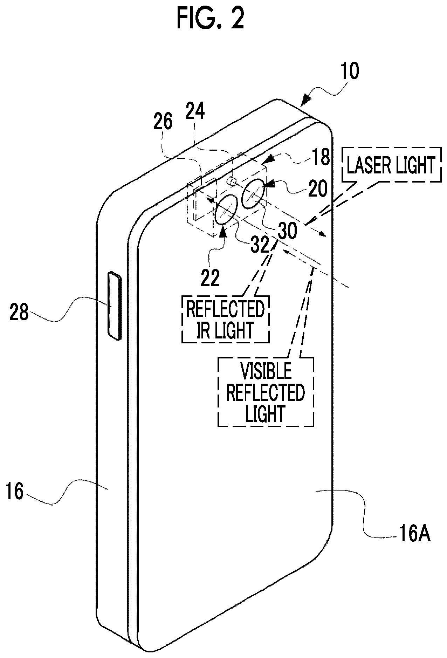

As shown in Fig. 2 as an example, the smart device 10 comprises a housing 16. The housing 16 accommodates a distance-measuring imager 18. The distance-measuring imager 18 comprises a light irradiator 20 and a light receiver 22. The light irradiator 20 comprises an LD 24, and the light receiver 22 comprises a photoelectric conversion element 26. The imaging operation and the distance measurement operation in the smart device 10 are realized by using the distance-measuring imager 18.

An instruction key 28 is disposed on a side surface of the smart device 10. The instruction key 28 receives various instructions. The term "various instructions" mentioned here refers to, for example, an instruction to display a menu screen on which various menus can be selected, an instruction to select one or a plurality of menus, an instruction to determine a selection content, and an instruction to delete a selection content.

Light transmission windows 30 and 32 are provided on an upper portion of a rear surface 16A of the housing 16 in a case in which the smart device 10 is in a vertically placed state. The light transmission windows 30 and 32 are optical elements (for example, lenses) having light-transmitting properties, are disposed at predetermined intervals (for example, intervals of several millimeters) in a horizontal direction, and are exposed from the rear surface 16A. The light irradiator 20 irradiates the subject 14 (see Fig. 1) with the laser light emitted from the LD 24 via the light transmission window 30. In the present embodiment, laser light in an infrared wavelength range is employed. However, the wavelength range of the laser light is not limited thereto, and laser light in other wavelength ranges may be used.

The light receiver 22 receives reflected IR light via the light transmission window 32. The reflected IR light refers to reflected light of the laser light emitted to the subject 14 by the light irradiator 20. In addition, the light receiver 22 receives visible reflected light via the light transmission window 32. The visible reflected light refers to reflected light of the visible light emitted to the subject 14. The photoelectric conversion element 26 receives the reflected IR light received by the light receiver 22 via the light transmission window 32 and outputs an electrical signal corresponding to the amount of the received reflected IR light. In addition, the photoelectric conversion element 26 receives the visible reflected light received by the light receiver 22 via the light transmission window 32 and outputs an electrical signal corresponding to the amount of the received visible reflected light. In the following description, for convenience of description, in a case in which it is not necessary to distinguish between the reflected IR light and the visible reflected light, the reflected IR light and the visible reflected light will be simply referred to as "reflected light".

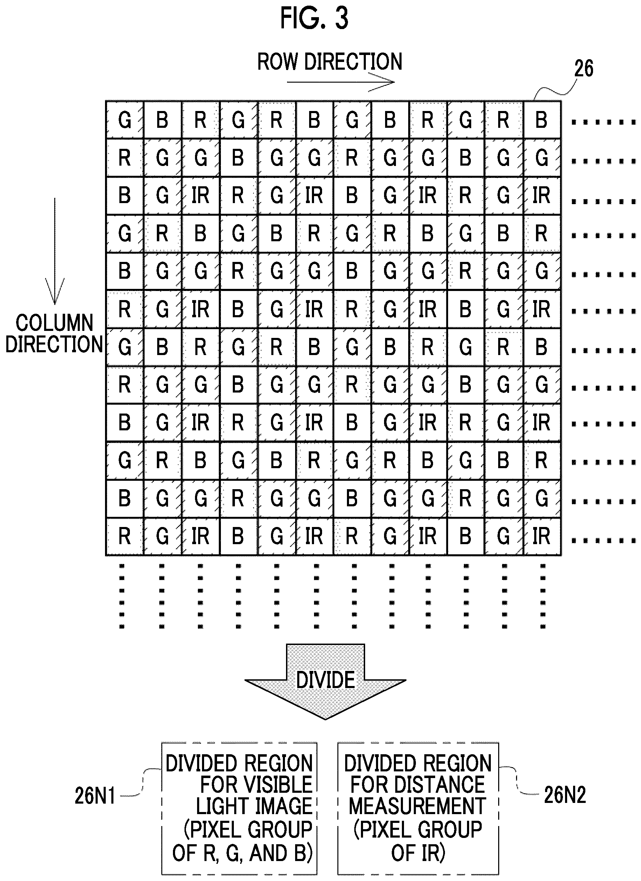

As shown in Fig. 3 as an example, the photoelectric conversion element 26 has a plurality of photodiodes arranged in a matrix. Photodiodes of "4896 × 3265" pixels are illustrated as an example of the plurality of photodiodes.

Color filters are arranged in photodiodes included in the photoelectric conversion element 26. The color filter includes a G filter corresponding to a G (green) wavelength range, an R filter corresponding to an R (red) wavelength range, a B filter corresponding to a B (blue) wavelength range, and an IR (infrared) filter corresponding to an IR wavelength range, which most contribute to obtaining a brightness signal. In the present embodiment, the G filter, the R filter, and the B filter also have a function as an infrared light cut filter that cuts infrared light.

The photoelectric conversion element 26 has R pixels, G pixels, B pixels, and IR pixels. The R pixel is a pixel corresponding to a photodiode in which an R filter is disposed, the G pixel is a pixel corresponding to a photodiode in which a G filter is disposed, the B pixel is a pixel corresponding to a photodiode in which a B filter is disposed, and the IR pixel is a pixel corresponding to a photodiode in which an IR filter is disposed. The R pixels, the G pixels, the B pixels, and the IR pixels are arranged with predetermined periodicity in each of a row direction (horizontal direction) and a column direction (vertical direction). In the present embodiment, the arrangement of the R pixels, the G pixels, the B pixels, and the IR pixels is an arrangement obtained by replacing some of the G pixels with the IR pixels in an X-Trans (registered trademark) arrangement. The IR pixels are arranged with specific periodicity along the row direction and the column direction.

Here, although the arrangement based on the X-Trans arrangement is exemplified as the arrangement of the R pixels, the G pixels, the B pixels, and the IR pixels, the present disclosure is not limited to this, and the arrangement of the R pixels, the G pixels, the B pixels, and the IR pixels may be an arrangement based on another arrangement such as a Bayer arrangement or a honeycomb (registered trademark) arrangement.

In addition, here, the arrangement obtained by replacing some of the G pixels with the IR pixels in the arrangements generally known as the arrangement of the R pixels, the G pixels, and the B pixels is exemplified as the arrangement of the R pixels, the G pixels, the B pixels, and the IR pixels, but the present disclosure is not limited to this. For example, a color filter corresponding to each of the R pixel, the G pixel, and the B pixel (hereinafter, these are also referred to as "visible light pixels") may be a color filter that also transmits infrared light, and a pair of photodiodes including a photodiode for a visible light pixel and a photodiode for an IR pixel (for example, InGaAs APD) may be disposed for one color filter.

In the present embodiment, the photoelectric conversion element 26 is divided into two regions. That is, the photoelectric conversion element 26 has a divided region for a visible light image 26N1 and a divided region for distance measurement 26N2. The divided region for a visible light image 26N1 is a visible light pixel group including a plurality of visible light pixels, and is used for generating a visible light image. The divided region for distance measurement 26N2 is an IR pixel group including a plurality of IR pixels, and is used for distance measurement. The divided region for a visible light image 26N1 receives the visible reflected light and outputs an electrical signal corresponding to the amount of received light. The divided region for distance measurement 26N2 receives the reflected IR light and outputs an electrical signal corresponding to the amount of received light.

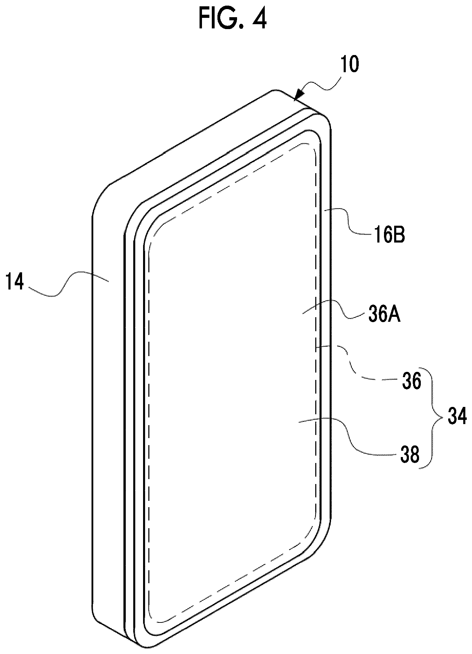

As shown in Fig. 4 as an example, a touch panel display 34 is provided on a front surface 16B of the housing 16. The touch panel display 34 comprises a display 36 and a touch panel 38. An example of the display 36 is an EL display. The display 36 may be other types of displays such as a liquid crystal display instead of an EL display.

An image (for example, a live view image, a main exposure image, and a reproduced image), text information, and the like are displayed on a screen 36A of the display 36. The touch panel 38 is a transmissive touch panel and is superimposed on a surface of a display region of the display 36. The touch panel 38 detects a contact with a finger or an indicator such as a stylus pen to receive an instruction from the user 12 (see Fig. 1). Here, although an out-cell type touch panel display is exemplified as an example of the touch panel display 34, this is merely an example. For example, an on-cell or in-cell touch panel display can also be applied as the touch panel display 34.

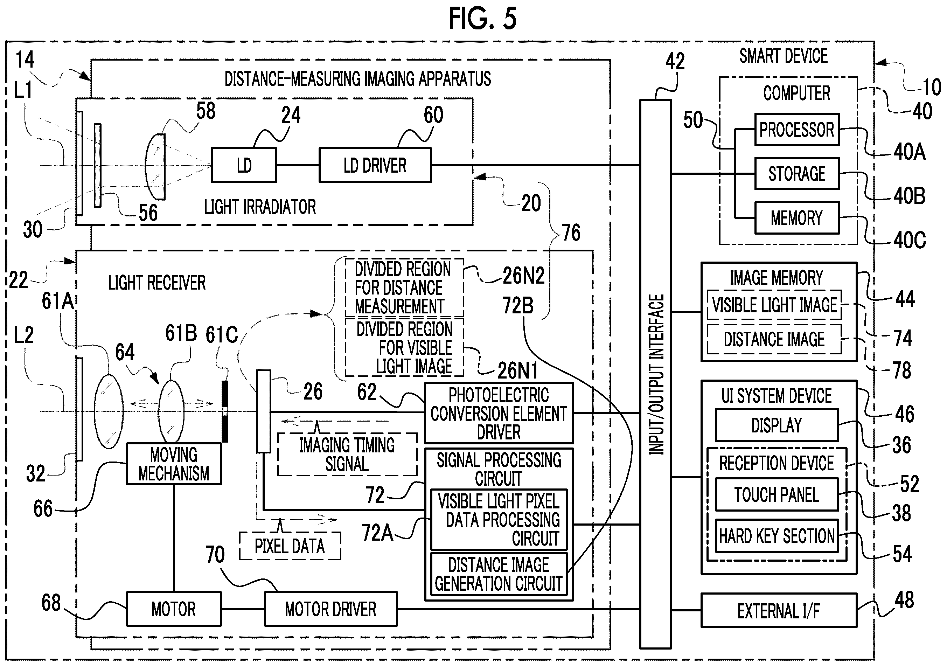

As shown in Fig. 5 as an example, the smart device 10 comprises a computer 40, an input/output interface 42, an image memory 44, a UI system device 46, and an external I/F 48, in addition to the light irradiator 20 and the light receiver 22. In the present embodiment, the computer 40 is an example of an "image processing device" and a "computer" according to the present disclosure.

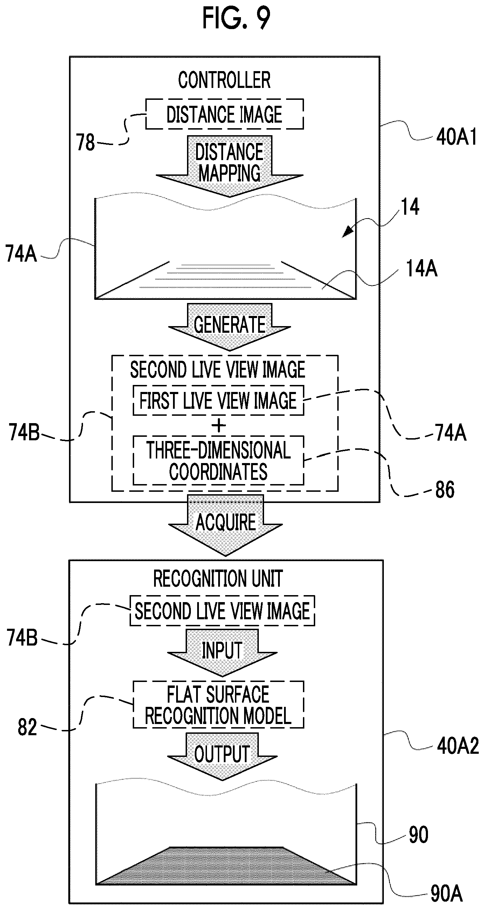

The computer 40 comprises a processor 40A, a storage 40B, and a memory 40C. In the present embodiment, the processor 40A is an example of a "processor" according to the present disclosure. The processor 40A, the storage 40B, and the memory 40C are connected via a bus 50, and the bus 50 is connected to the input/output interface 42. In the example shown in Fig. 9, one bus is illustrated as the bus 50 for convenience of illustration, but a plurality of buses may be used. The bus 50 may be a serial bus or may be a parallel bus including a data bus, an address bus, a control bus, and the like.

Various programs are stored in the storage 40B. The processor 40A reads out a necessary program from the storage 40B and executes the read-out program on the memory 40C. The processor 40A controls the entire smart device 10 in accordance with the program executed on the memory 40C.

A plurality of devices are connected to the input/output interface 42, and the input/output interface 42 controls the exchange of various types of information between the plurality of devices. In the example shown in Fig. 5, the computer 40, the light irradiator 20, the light receiver 22, the image memory 44, the UI system device 46, and the external I/F 48 are shown as the plurality of devices connected to the input/output interface 42.

The external I/F 48 controls the exchange of various types of information with a device (hereinafter, also referred to as an "external device") present outside the smart device 10. An example of the external I/F 48 is a USB interface. An external device (not shown) such as a smart device, a personal computer, a server, a USB memory, a memory card, and/or a printer can be directly or indirectly connected to the USB interface.

The UI system device 46 comprises the display 36, and the processor 40A displays various types of information on the display 36. In addition, the UI system device 46 comprises a reception device 52. The reception device 52 comprises the touch panel 38 and a hard key section 54. The hard key section 54 is at least one hard key including the instruction key 28 (see Fig. 2). The processor 40A operates in response to various instructions received by the touch panel 38. Here, although the hard key section 54 is included in the UI system device 46, the present disclosure is not limited to this. For example, the hard key section 54 may be connected to the external I/F 48.

The light irradiator 20 comprises the light transmission window 30, a beam expander 56, a collimating lens 58, the LD 24, and an LD driver 60, and the light transmission window 30, the beam expander 56, and the collimating lens 58 are arranged in this order from the subject 14 side (physical object side) to the LD 24 along an optical axis L1. The LD driver 60 is connected to the LD 24 and the input/output interface 42, and drives the LD 24 in response to an instruction from the processor 40A to cause the LD 24 to emit laser light.

The laser light emitted from the LD 24 is converted into parallel light by the collimating lens 58, the beam expander 56 expands a diameter of the light, and the subject 14 is irradiated with the light from the light transmission window 30.

The light receiver 22 comprises the light transmission window 32, an objective lens 61A, a focus lens 61B, a stop 61C, the photoelectric conversion element 26, a photoelectric conversion element driver 62, and a signal processing circuit 72. In the light receiver 22, the light transmission window 32, the objective lens 61A, the focus lens 61B, and the stop 61C are arranged in this order from the subject 14 side (physical object side) to the photoelectric conversion element 26 along an optical axis L2. The photoelectric conversion element driver 62 is connected to the photoelectric conversion element 26 and the input/output interface 42, and drives the photoelectric conversion element 26 in response to an instruction from the processor 40A. For example, the photoelectric conversion element driver 62 supplies an imaging timing signal for defining a timing of imaging performed by the photoelectric conversion element 26 to the photoelectric conversion element 26 under the control of the processor 40A. The photoelectric conversion element 26 performs reset, exposure, and output of an electrical signal in accordance with the imaging timing signal supplied from the photoelectric conversion element driver 62. Examples of the imaging timing signal include a vertical synchronization signal and a horizontal synchronization signal.

The light receiver 22 comprises a focusing control mechanism 64. The focusing control mechanism 64 comprises the focus lens 61B, a moving mechanism 66, a motor 68, and a motor driver 70. The focus lens 61B is supported by the moving mechanism 66 to be slidable along the optical axis L2. The motor 68 is connected to the moving mechanism 66 and the motor driver 70. The motor driver 70 is connected to the input/output interface 42 and drives the motor 68 in response to an instruction from the processor 40A. The moving mechanism 66 is connected to a drive shaft (not shown) of the motor 68, and selectively moves the focus lens 61B between a physical object side and an image side along the optical axis L2 by receiving power from the motor 68. That is, the processor 40A adjusts the focus position by controlling the driving of the motor 68 via the motor driver 70. Here, the term "focus position" refers to a position of the focus lens 61B on the optical axis L2 in a state in which the image is in focus (for example, a state in which the contrast of the visible light image is set to the maximum value or a state in which a predetermined subject depth is achieved).

The stop 61C is a fixed stop whose opening does not change. In a case of the fixed stop, exposure adjustment is performed by an electronic shutter of the photoelectric conversion element 26. The stop 61C may be a variable stop instead of the fixed stop. The objective lens 61A, the focus lens 61B, and the stop 61C included in the light receiver 22 are merely examples, and the present disclosure is established even in a case in which the configuration of the lens and/or the position of the stop 61C is changed.

The reflected light is incident into the light receiver 22 from the light transmission window 32. The reflected light incident into the light receiver 22 is imaged on the photoelectric conversion element 26 via the objective lens 61A, the focus lens 61B, and the stop 61C.

The photoelectric conversion element 26 is connected to the signal processing circuit 72, and outputs pixel data indicating a pixel value to the signal processing circuit 72 for each pixel of the visible light pixels and the IR pixels. The signal processing circuit 72 digitizes the pixel data by performing A/D conversion on the pixel data input from the photoelectric conversion element 26, and performs various types of signal processing on the digitized pixel data.

The signal processing circuit 72 comprises a visible light pixel data processing circuit 72A and a distance image generation circuit 72B. The visible light pixel data processing circuit 72A generates a visible light image 74 by performing known signal processing, such as white balance adjustment, sharpness adjustment, gamma correction, color space conversion processing, and color difference correction, on the pixel data for the visible light pixels. Then, the visible light pixel data processing circuit 72A stores the visible light image 74 in the image memory 44. The visible light image 74 of one frame is overwritten and stored in the image memory 44, and thus the visible light image 74 in the image memory 44 is updated.

The distance-measuring imager 18 comprises a TOF camera 76. The TOF camera 76 comprises the light irradiator 20, the divided region for distance measurement 26N2, and the distance image generation circuit 72B. The distance image generation circuit 72B acquires an emission timing signal indicating a timing (hereinafter, also referred to as an "emission timing") at which the laser light is emitted from the LD 24, from the processor 40A. The distance image generation circuit 72B measures a distance from the smart device 10 to the subject 14 (see Fig. 1) for each IR pixel based on the emission timing indicated by the emission timing signal and a timing (hereinafter, also referred to as a "light-receiving timing") at which the reflected IR light is received by each IR pixel. In the present embodiment, the TOF camera 76 is an example of a "distance-measuring sensor" according to the present disclosure.

The distance image generation circuit 72B generates a distance image 78 related to the distance from the smart device 10 to the subject 14 (see Fig. 1) based on a measurement result for each IR pixel, and stores the generated distance image 78 in the image memory 44. The distance image 78 of one frame is overwritten and stored in the image memory 44, and thus the distance image 78 in the image memory 44 is updated. In the present embodiment, the distance image 78 is an example of "distance information" according to the present disclosure.

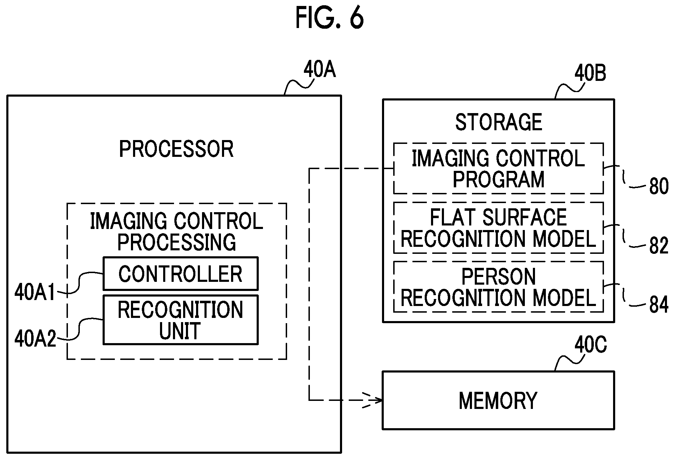

As shown in Fig. 6 as an example, an imaging control program 80 is stored in the storage 40B. In the present embodiment, the imaging control program 80 is an example of a "program" according to the present disclosure.

The processor 40A reads out the imaging control program 80 from the storage 40B and executes the read-out imaging control program 80 on the memory 40C to perform imaging control processing. The imaging control processing is realized by the processor 40A operating as a controller 40A1 and a recognition unit 40A2 in accordance with the imaging control program 80 executed on the memory 40C.

A flat surface recognition model 82 and a person recognition model 84 are stored in the storage 40B. Although details will be described below, the flat surface recognition model 82 and the person recognition model 84 are trained models used in AI-based processing. The flat surface recognition model 82 is used by the recognition unit 40A2, and the person recognition model 84 is used by the controller 40A1.

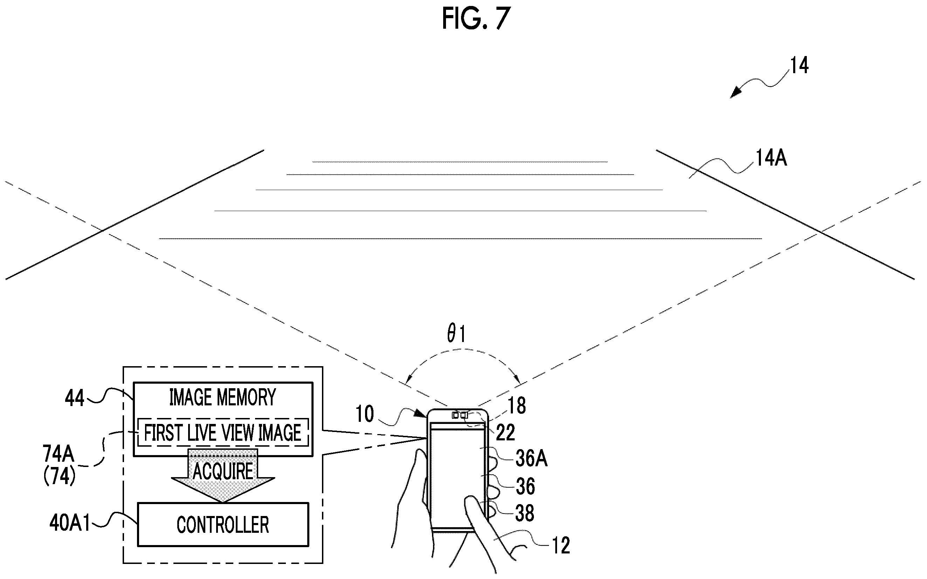

As shown in Fig. 7 as an example, in the smart device 10, in a case in which an instruction to start imaging is received by the touch panel 38, the subject 14 within the angle of view θ1 is imaged by the light receiver 22. That is, the light receiver 22 receives the visible reflected light and generates a first live view image 74A, which is a live view image corresponding to the received visible reflected light. The first live view image 74A is a type of the visible light image 74.

The first live view image 74A is stored in the image memory 44 and is acquired by the controller 40A1. The controller 40A1 performs processing using the first live view image 74A (for example, display of the first live view image 74A on the screen 36A).

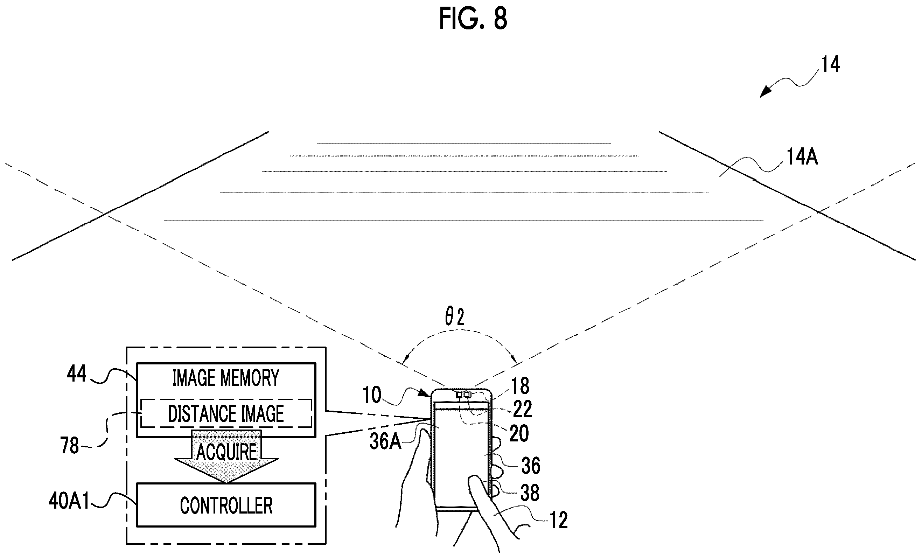

As shown in Fig. 8 as an example, in the smart device 10, in a case in which an instruction to start imaging is received by the touch panel 38, distance measurement is performed in units of a predetermined number of frames of the first live view image 74A (here, as an example, in units of one frame). In a case in which a start timing of the distance measurement is reached, the light irradiator 20 emits laser light. An angle at which the laser light is emitted (hereinafter, also referred to as an "irradiation angle") is θ2. The irradiation angle θ2 is an angle whose width includes the angle of view θ1. In a case in which the angle of view θ1 is changed in response to the instruction received by the touch panel 38, the irradiation angle θ2 is also changed in conjunction with the change in the angle of view θ1.

In the smart device 10, the distance from the smart device 10 to the subject 14 (see Fig. 1) is measured based on the time required from when the laser light is emitted by the light irradiator 20 until the reflected IR light is received by the divided region for distance measurement 26N2 (see Figs. 3 and 5) of the light receiver 22, and the speed of light. For example, in a case in which the distance to the subject 14 is "L", the speed of light is "c", and the time required from when the laser light is emitted by the light irradiator 20 until the reflected IR light is received by the divided region for distance measurement 26N2 is "t", a distance L is calculated according to an equation of "L = c × t × 0.5".

In the smart device 10, the reflected IR light is received by each of the plurality of IR pixels included in the divided region for distance measurement 26N2, and the distance measurement is performed for each IR pixel. Then, the distance measurement result for each IR pixel is generated as the distance image 78, and the distance image 78 is stored in the image memory 44. The distance image 78 of the image memory 44 is acquired and used by the controller 40A1. Here, the distance image 78 refers to an image in which the distance to the subject 14 measured for each IR pixel is represented by color and/or shade.

As shown in Fig. 9 as an example, the controller 40A1 generates a second live view image 74B by mapping the distance obtained from the distance image 78 onto the first live view image 74A. That is, the second live view image 74B is generated by mapping the distance calculated by interpolation using the distance indicated by the distance image 78 or the plurality of distances indicated by the distance image 78 to each pixel included in the first live view image 74A. The second live view image 74B includes the first live view image 74A and three-dimensional coordinates 86 added to each pixel included in the first live view image 74A. The three-dimensional coordinates 86 are defined by two coordinates that define a position (that is, a two-dimensional position) within the first live view image 74A of a pixel included in the first live view image 74A and coordinates indicating the distance obtained from the distance image 78.

The recognition unit 40A2 acquires the second live view image 74B generated by the controller 40A1, from the controller 40A1. Then, the recognition unit 40A2 executes flat surface recognition processing. The flat surface recognition processing refers to processing in which the recognition unit 40A2 recognizes the flat surface 14A shown in the second live view image 74B by using the second live view image 74B and the flat surface recognition model 82. In the present embodiment, the flat surface recognition processing is an example of "physical object recognition processing" according to the present disclosure.

The flat surface recognition model 82 is a trained model for physical object recognition in an AI-based segmentation method (for example, U-Net or Mask R-CNN), and is obtained by performing machine learning on a neural network.

The flat surface recognition model 82 is a trained model optimized by performing machine learning using first training data, which is a data set including a plurality of data (that is, a plurality of frames of data) in which first example data and first correct answer data are associated with each other.

The first example data is an image in which a surface having a predetermined feature is shown (for example, a sample image assuming the second live view image 74B). Examples of the surface having the predetermined feature include a flat surface (for example, a generally known flat surface on which a person stands in an imaging scene for a portrait, such as a floor or a road surface) on which no visual texture (for example, patterns or bumps) is visually perceptible.

The first correct answer data refers to correct answer data (that is, an annotation) for the first example data. That is, the first correct answer data is information for specifying a surface having a predetermined feature shown in the image used as the first example data. An example of the first correct answer data is an annotation (for example, three-dimensional coordinates) that specifies the geometric characteristics (for example, the position, the size, and the shape) of the surface having the predetermined feature.

The recognition unit 40A2 inputs the second live view image 74B to the flat surface recognition model 82 to cause the flat surface recognition model 82 to generate and output a segmentation map 90. A coordinate system of the segmentation map 90 is the same coordinate system as the coordinate system applied to the second live view image 74B. The segmentation map 90 includes a segmentation mask 90A that is information for specifying the flat surface 14A. The recognition unit 40A2 recognizes the flat surface 14A shown in the second live view image 74B from the segmentation mask 90A in the segmentation map 90.

In the present embodiment, the second live view image 74B is an example of a "live view image" according to the present disclosure. In addition, in the present embodiment, the flat surface 14A is an example of a "reference surface" and a "surface having a feature recognized by performing the physical object recognition processing on the live view image" according to the present disclosure.

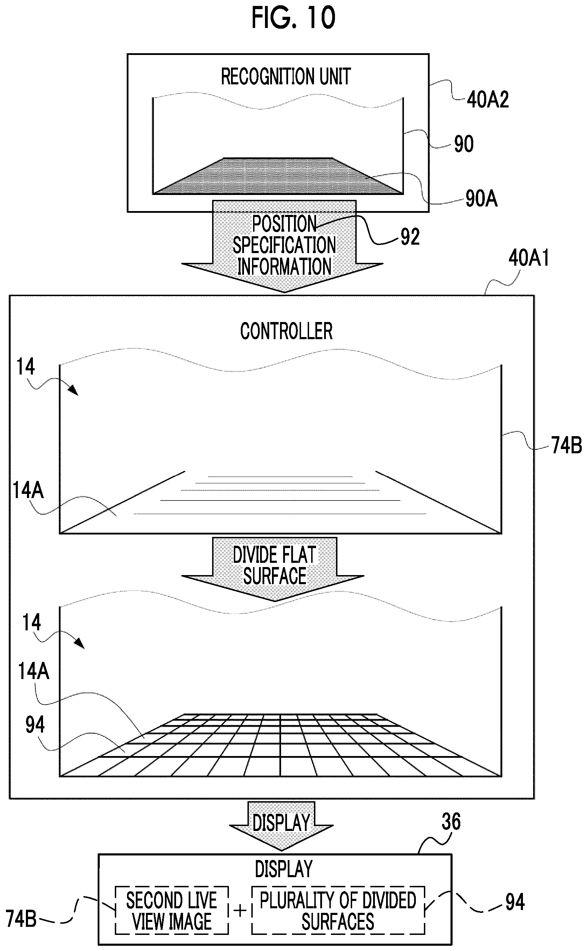

As shown in Fig. 10 as an example, the recognition unit 40A2 generates position specification information 92 based on the segmentation mask 90A. The position specification information 92 is information (for example, three-dimensional coordinates defined in the same coordinate system as the three-dimensional coordinates 86) for specifying the position of the flat surface 14A in the second live view image 74B. The controller 40A1 acquires the position specification information 92 from the recognition unit 40A2 and specifies the position of the flat surface 14A in the second live view image 74B based on the position specification information 92.

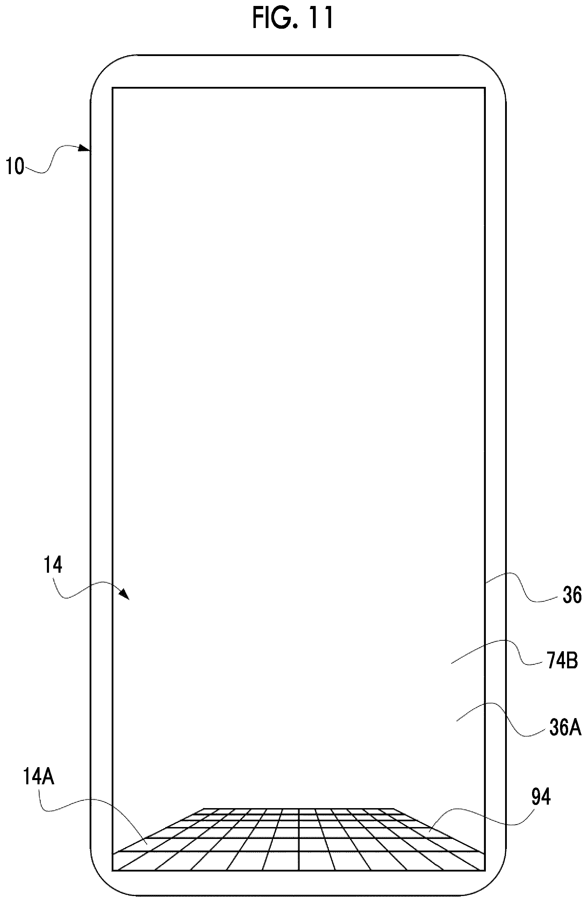

The controller 40A1 divides the flat surface 14A in the second live view image 74B. A plurality of divided surfaces 94 are obtained by dividing the flat surface 14A. The controller 40A1 displays the second live view image 74B and the plurality of divided surfaces 94 on the display 36. In this case, as shown in Fig. 11 as an example, the second live view image 74B in which the subject 14 including the flat surface 14A is shown is displayed on the screen 36A, and the plurality of divided surfaces 94 are superimposed and displayed on the flat surface 14A shown in the second live view image 74B. A logo mark may be attached to the plurality of divided surfaces 94.

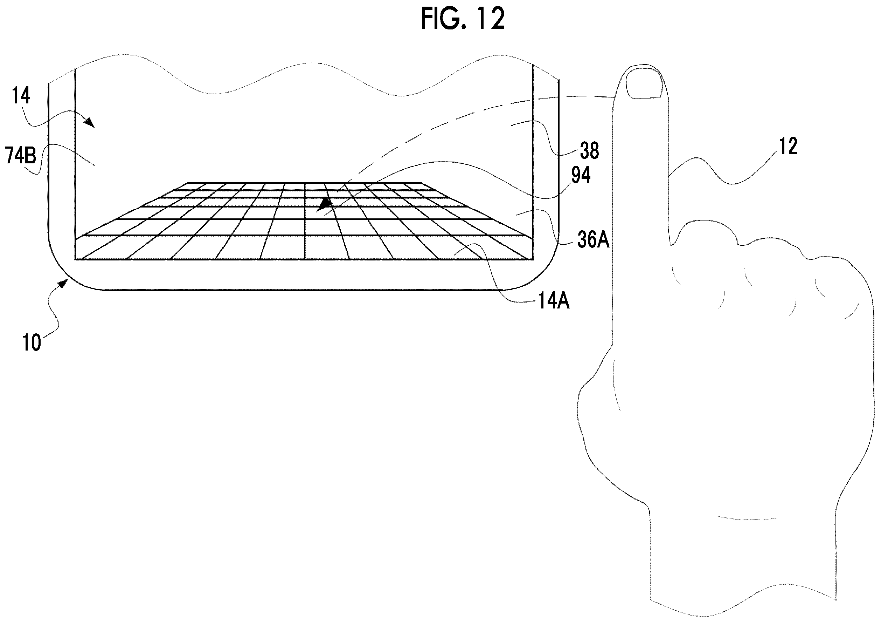

As shown in Fig. 12 as an example, the user 12 selects one of the plurality of divided surfaces 94. The selection of the divided surface 94 from the user 12 is realized by receiving an instruction from the user 12 through the touch panel 38.

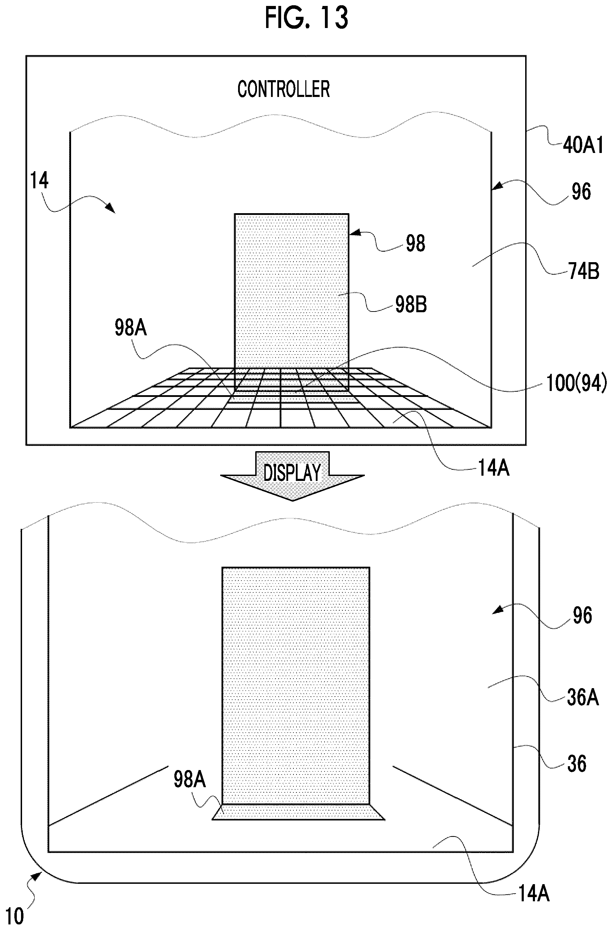

As shown in Fig. 13 as an example, the controller 40A1 generates a composite image 96 using the second live view image 74B. The composite image 96 is an image realized by augmented reality. For example, the composite image 96 is an image in which the second live view image 74B and a photo booth 98, which is a virtual three-dimensional object generated by CG, are combined.

The controller 40A1 generates the photo booth 98 in the second live view image 74B. In the second live view image 74B, the photo booth 98 is an object defined in three dimensions based on at least the distance image 78. Here, the object defined in three dimensions refers to, for example, an object defined by the three-dimensional coordinates 86 based on the distance image 78. In the second live view image 74B, the photo booth 98 is installed on an installation surface 100 determined based on the flat surface 14A. The installation surface 100 is the divided surface 94 selected by the user 12 (see Fig. 12).

In the composite image 96, the photo booth 98 is a translucent object positioned on the installation surface 100. In addition, the photo booth 98 has a planar floor surface 98A positioned on the installation surface 100 and a planar rear surface 98B that rises vertically from one end on the back side of the floor surface 98A. The photo booth 98 is updated accordingly in a case in which the second live view image 74B is obtained (for example, at a timing determined by a frame rate of the second live view image 74B). Here, the update refers to regeneration of the photo booth 98.

In a case in which the composite image 96 is generated as described above, the controller 40A1 outputs the composite image 96 to the display 36. The composite image 96 is displayed on the screen 36A of the display 36.

In the present embodiment, the composite image 96 is an example of a "composite image" according to the present disclosure. In addition, in the present embodiment, the photo booth 98 is an example of an "object defined in three dimensions" and a "photo booth" according to the present disclosure.

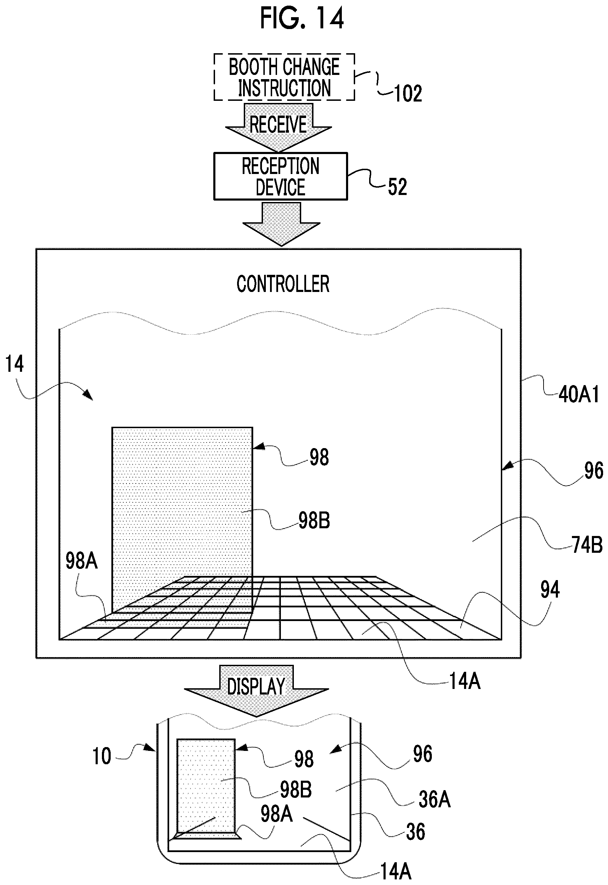

As shown in Fig. 14 as an example, the controller 40A1 changes the geometric characteristics of the photo booth 98 according to a change condition that is a condition for changing the geometric characteristics of the photo booth 98. The change condition includes a booth change instruction 102 that is an instruction to change the geometric characteristics of the photo booth 98. In the present embodiment, the change condition is an example of a "first condition" according to the present disclosure, and the booth change instruction 102 is an example of a "first change instruction" according to the present disclosure.

In a case in which the booth change instruction 102 is received by the reception device 52, the controller 40A1 changes the geometric characteristics of the photo booth 98 (in the example shown in Fig. 14, the position of the photo booth 98 in the composite image 96) in response to the booth change instruction 102. The geometric characteristics of the photo booth 98 are updated in accordance with a timing at which the second live view image 74B is updated (that is, a timing determined in accordance with the frame rate of the second live view image 74B). In a case in which the geometric characteristics of the photo booth 98 are changed, the controller 40A1 displays the composite image 96 including the photo booth 98 with the changed geometric characteristics on the screen 36A.

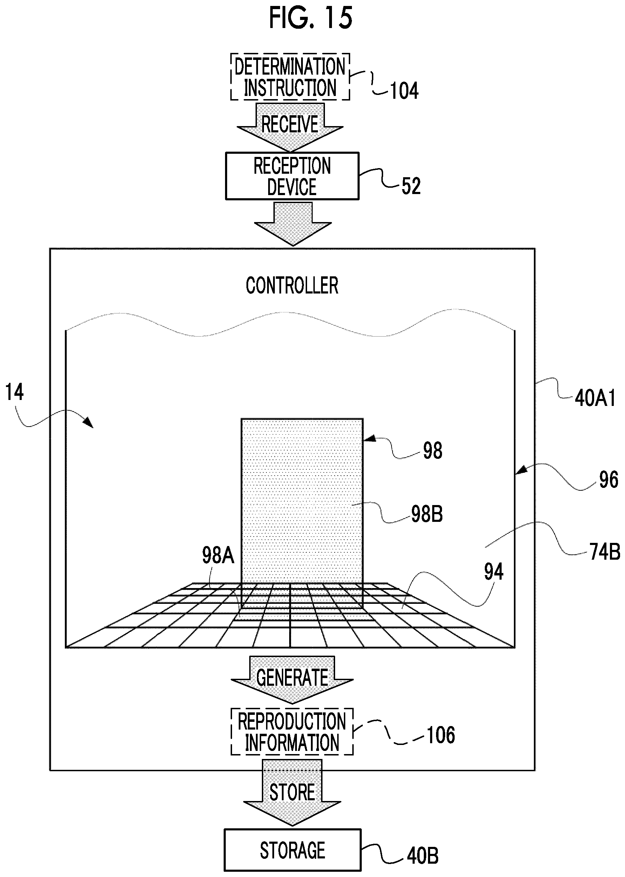

As shown in Fig. 15 as an example, in a case in which a determination instruction 104, which is an instruction to determine an installation location of the photo booth 98 in the composite image 96, is received by the reception device 52, the controller 40A1 determines the installation position of the photo booth 98 in the composite image 96 in accordance with the determination instruction 104. In a case in which the installation position of the photo booth 98 in the composite image 96 is determined, the controller 40A1 generates reproduction information 106 for reproducing the photo booth 98 and stores the reproduction information 106 in the storage 40B. The reproduction information 106 includes three-dimensional coordinates for specifying the geometric characteristics (for example, the position, the size, and the shape) of the photo booth 98 in the composite image 96. In the present embodiment, the determination instruction 104 is an example of a "received operation" according to the present disclosure.

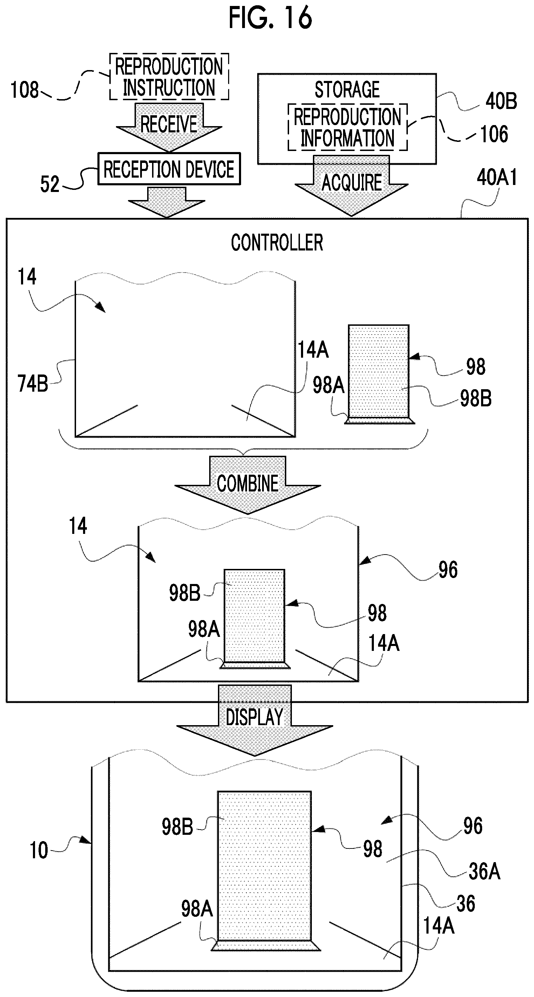

As shown in Fig. 16 as an example, in a case in which a reproduction condition that is a condition for reproducing the photo booth 98 is satisfied, the controller 40A1 acquires the second live view image 74B and acquires the reproduction information 106 from the storage 40B. An example of the reproduction condition is that a reproduction instruction 108, which is an instruction to reproduce the photo booth 98, is received by the reception device 52.

The controller 40A1 generates the composite image 96 by reproducing the photo booth 98 in the second live view image 74B in accordance with the reproduction information 106 acquired from the storage 40B. Then, the controller 40A1 displays the generated composite image 96 on the screen 36A.

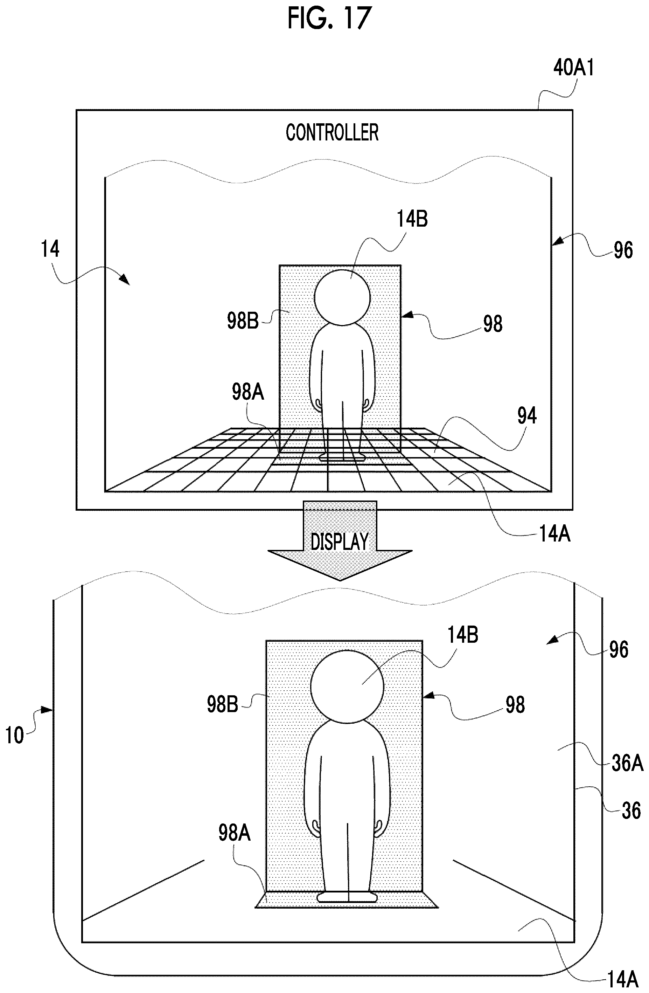

As shown in Fig. 17 as an example, in a case in which the installation position of the photo booth 98 in the composite image 96 is determined and the composite image 96 is displayed on the screen 36A, the user 12 guides the person 14B into the photo booth 98 such that the person 14B fits within the photo booth 98 on the composite image 96.

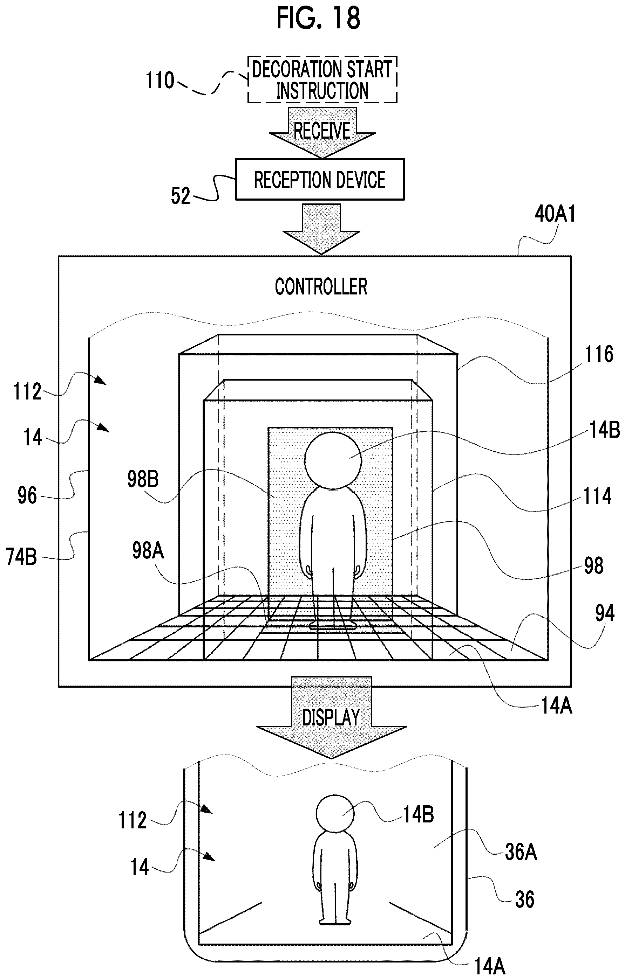

As shown in Fig. 18 as an example, in a case in which a decoration start instruction 110, which is an instruction to start decoration on the second live view image 74B, is received by the reception device 52 in a state where the person 14B has entered the photo booth 98 on the composite image 96, the controller 40A1 generates an augmented reality image 112.

The augmented reality image 112 is an image in which the second live view image 74B and at least one virtual space determined based on the geometric characteristics (that is, the position, the size, and the shape) of the photo booth 98 are combined. A virtual three-dimensional object generated by CG is disposed in the virtual space. In the present embodiment, an image obtained by combining the second live view image 74B and a plurality of virtual spaces is employed as the augmented reality image 112. In addition, in the present embodiment, a foreground virtual space 114 and a background virtual space 116 are employed as the plurality of virtual spaces. Here, although one foreground virtual space 114 and one background virtual space 116 are exemplified, a plurality of foreground virtual spaces 114 and/or a plurality of background virtual spaces 116 may be provided.

The foreground virtual space 114 is a virtual space in which a foreground of the person 14B in the photo booth 98 can be represented, and the background virtual space 116 is a virtual space in which a background of the person 14B in the photo booth 98 can be represented. The foreground virtual space 114 and the background virtual space 116 are defined in the same coordinate system as the second live view image 74B.

The controller 40A1 displays the augmented reality image 112 on the screen 36A. In the augmented reality image 112 displayed on the screen 36A, the photo booth 98 and the plurality of virtual spaces (here, as an example, the foreground virtual space 114 and the background virtual space 116) are not visualized. Here, the meaning of not being visualized includes not only the meaning of not being displayed but also the meaning of being displayed at a visually imperceptible display intensity. Although a form example in which the photo booth 98 and the plurality of virtual spaces are not visualized is described here, either or both of the photo booth 98 and the plurality of virtual spaces may be visualized.

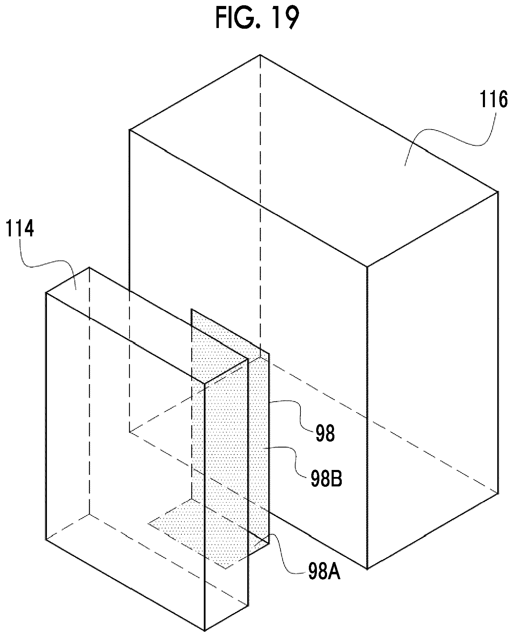

As shown in Figs. 18 and 19 as an example, the foreground virtual space 114 is a virtual space disposed in front of the photo booth 98. The geometric characteristics (that is, the position, the size, and the shape) of the foreground virtual space 114 are determined based on the geometric characteristics of the photo booth 98. For example, it is calculated from an arithmetic expression in which the geometric characteristics of the photo booth 98 are independent variables and the geometric characteristics of the foreground virtual space 114 are dependent variables. In addition, the background virtual space 116 is a virtual space disposed behind the photo booth 98. The geometric characteristics (that is, the position, the size, and the shape) of the background virtual space 116 are also determined based on the geometric characteristics of the photo booth 98. For example, it is calculated from an arithmetic expression in which the geometric characteristics of the photo booth 98 are independent variables and the geometric characteristics of the background virtual space 116 are dependent variables.

In the present embodiment, the augmented reality image 112 is an example of an "augmented reality image" according to the present disclosure. In addition, in the present embodiment, the foreground virtual space 114 is an example of a "virtual space" and a "foreground virtual space" according to the present disclosure. In addition, in the present embodiment, the background virtual space 116 is an example of a "virtual space" and a "background virtual space" according to the present disclosure. In addition, in the present embodiment, the person 14B is an example of a "physical object shown in the live view image" according to the present disclosure.

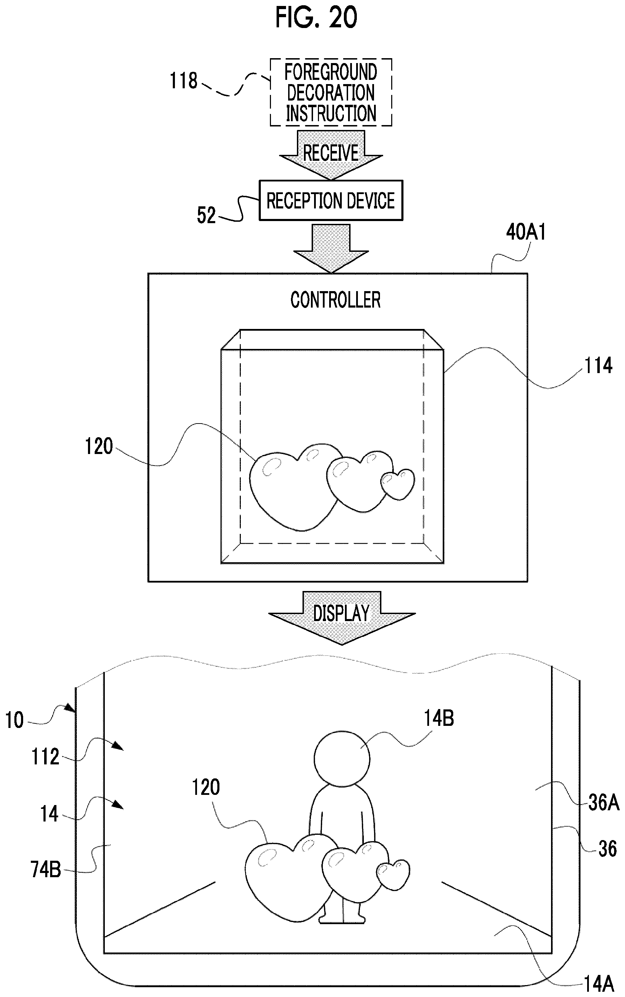

As shown in Fig. 20 as an example, in a case in which a foreground decoration instruction 118, which is an instruction to decorate the foreground virtual space 114, is received by the reception device 52, the controller 40A1 disposes a foreground three-dimensional object 120 in the foreground virtual space 114 in accordance with the foreground decoration instruction 118.

The foreground three-dimensional object 120 is a virtual three-dimensional object generated by CG. The foreground three-dimensional object 120 may be one or more three-dimensional objects selected from a plurality of existing three-dimensional objects in accordance with the foreground decoration instruction 118, or may be one or more three-dimensional objects newly drawn in accordance with the foreground decoration instruction 118.

The controller 40A1 displays the second live view image 74B included in the augmented reality image 112 on the screen 36A, and displays the foreground three-dimensional object 120 disposed in the foreground virtual space 114 included in the augmented reality image 112 on the screen 36A. On the screen 36A, the foreground three-dimensional object 120 is displayed in front of the person 14B shown in the second live view image 74B. In the augmented reality image 112, the person 14B is partially occluded by the foreground three-dimensional object 120.

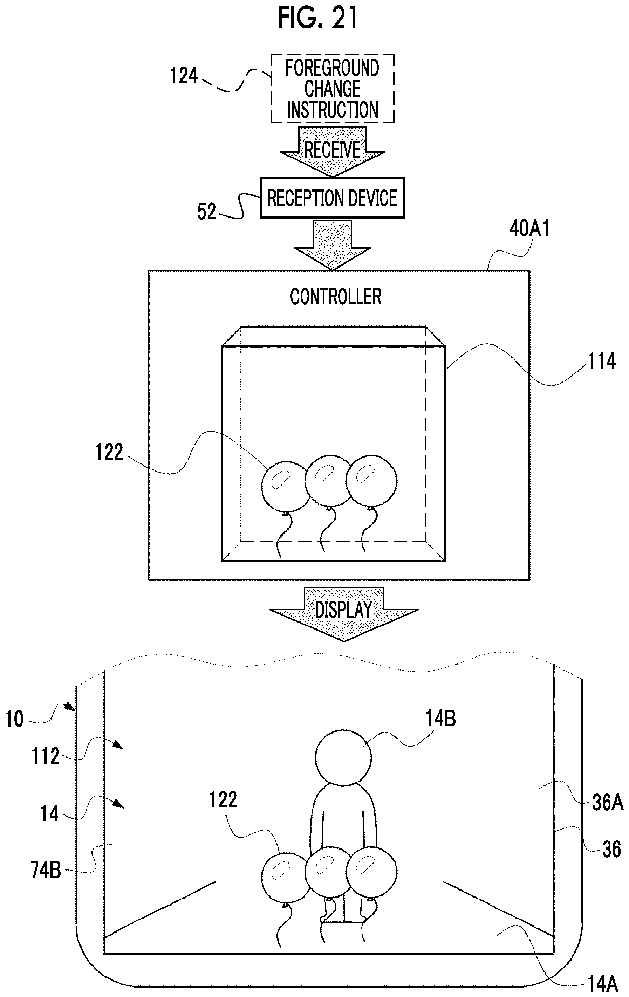

As shown in Fig. 21 as an example, the controller 40A1 changes the foreground three-dimensional object 120 (see Fig. 20) in the foreground virtual space 114 to a foreground three-dimensional object 122 according to a foreground change condition that is a condition for changing the foreground decoration. The foreground change condition includes a foreground change instruction 124 for changing the foreground decoration. In the present embodiment, the foreground change condition is an example of a "second condition" according to the present disclosure, and the foreground change instruction 124 is an example of a "second change instruction" according to the present disclosure.

In a case in which the foreground change instruction 124 is received by the reception device 52, the controller 40A1 changes the foreground three-dimensional object 120 (see Fig. 20) in the foreground virtual space 114 to the foreground three-dimensional object 122 in response to the foreground change instruction 124. The foreground three-dimensional object 122 may be one or more three-dimensional objects selected from a plurality of existing three-dimensional objects in accordance with the foreground change instruction 124, or may be one or more three-dimensional objects generated by partially modifying the foreground three-dimensional object 120 in accordance with the foreground change instruction 124. As described above, in a case in which the foreground three-dimensional object 120 is changed to the foreground three-dimensional object 122, the foreground three-dimensional object 122 is displayed in front of the person 14B shown in the second live view image 74B on the screen 36A. In the augmented reality image 112, the person 14B is partially occluded by the foreground three-dimensional object 122.

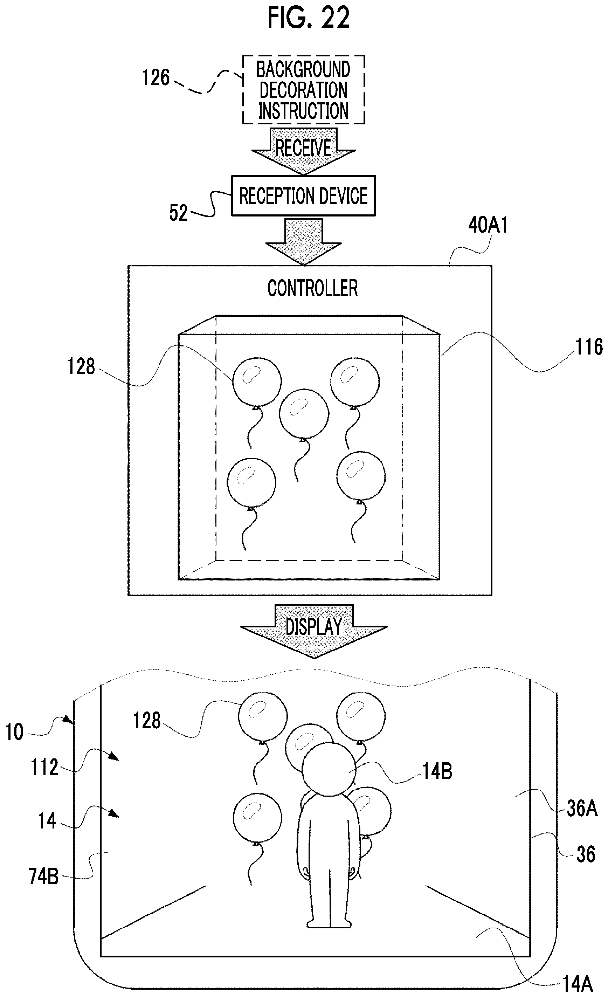

As shown in Fig. 22 as an example, in a case in which a background decoration instruction 126, which is an instruction to decorate the background virtual space 116, is received by the reception device 52, the controller 40A1 disposes a background three-dimensional object 128 in the background virtual space 116 in accordance with the background decoration instruction 126.

The background three-dimensional object 128 is a virtual three-dimensional object generated by CG. The background three-dimensional object 128 may be one or more three-dimensional objects selected from a plurality of existing three-dimensional objects in accordance with the background decoration instruction 126, or may be one or more three-dimensional objects newly drawn in accordance with the background decoration instruction 126.

The controller 40A1 displays the second live view image 74B included in the augmented reality image 112 on the screen 36A, and displays the background three-dimensional object 128 disposed in the background virtual space 116 included in the augmented reality image 112 on the screen 36A. On the screen 36A, the background three-dimensional object 128 is displayed behind the person 14B shown in the second live view image 74B. In the augmented reality image 112, the background three-dimensional object 128 is partially occluded by the person 14B.

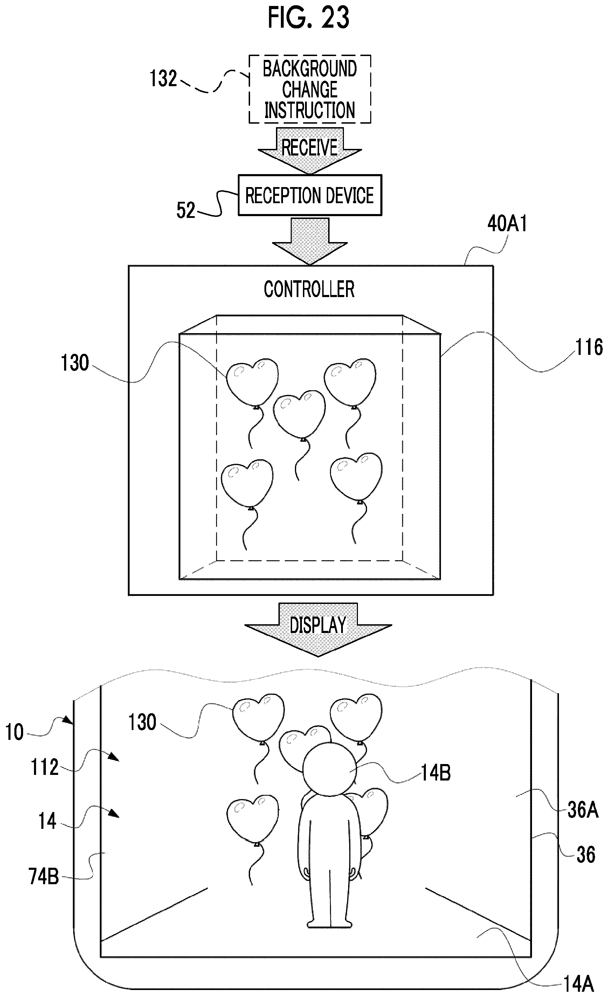

As shown in Fig. 23 as an example, the controller 40A1 changes the background three-dimensional object 128 (see Fig. 22) in the background virtual space 116 to a background three-dimensional object 130 according to a background change condition that is a condition for changing the background decoration. The background change condition includes a background change instruction 132 for changing the background decoration. In the present embodiment, the background change condition is an example of a "second condition" according to the present disclosure, and the background change instruction 132 is an example of a "second change instruction" according to the present disclosure.

In a case in which the background change instruction 132 is received by the reception device 52, the controller 40A1 changes the background three-dimensional object 128 (see Fig. 22) in the background virtual space 116 to the background three-dimensional object 130 in response to the background change instruction 132. The background three-dimensional object 130 may be one or more three-dimensional objects selected from a plurality of existing three-dimensional objects in accordance with the background change instruction 132, or may be one or more three-dimensional objects generated by partially modifying the background three-dimensional object 128 in accordance with the background change instruction 132. As described above, in a case in which the background three-dimensional object 128 is changed to the background three-dimensional object 130, the background three-dimensional object 130 is displayed behind the person 14B shown in the second live view image 74B on the screen 36A. In the augmented reality image 112, the background three-dimensional object 130 is partially occluded by the person 14B.

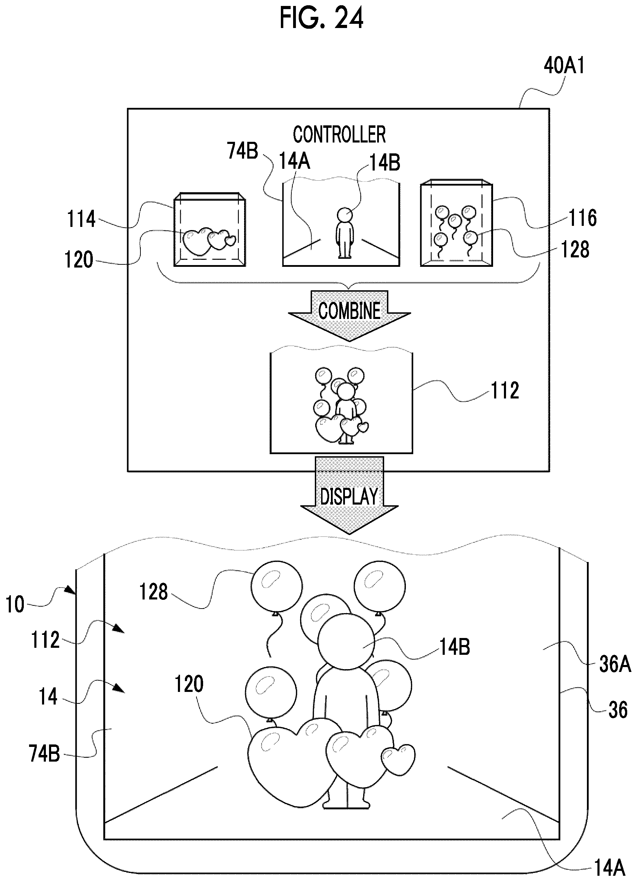

As shown in Fig. 24 as an example, the controller 40A1 generates the augmented reality image 112 by combining the second live view image 74B, the foreground virtual space 114 including the foreground three-dimensional object 120, and the background virtual space 116 including the background three-dimensional object 128. Then, the controller 40A1 outputs the augmented reality image 112 to the display 36. The augmented reality image 112 is displayed on the screen 36A of the display 36.

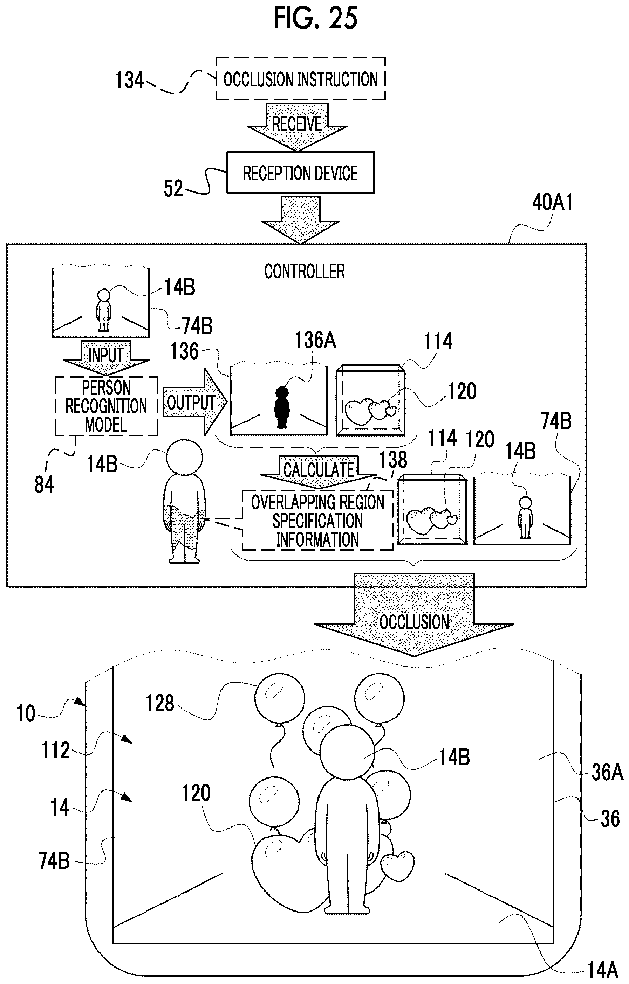

As shown in Fig. 25 as an example, the controller 40A1 executes occlusion processing based on the three-dimensional coordinates 86 on the person 14B shown in the augmented reality image 112 and the foreground three-dimensional object 120 according to an occlusion condition that is a condition for executing occlusion processing. The occlusion processing refers to processing of realizing occlusion. The occlusion refers to a phenomenon in which a physical object is partially or completely hidden by another physical object. The occlusion condition includes an occlusion instruction 134 that is an instruction to execute the occlusion.

In a case in which the occlusion instruction 134 is received by the reception device 52, the controller 40A1 executes person recognition processing on the second live view image 74B. The person recognition processing refers to processing of recognizing the person 14B shown in the second live view image 74B by the controller 40A1 using the second live view image 74B and the person recognition model 84.

The person recognition model 84 is a trained model for physical object recognition in an AI-based segmentation method (for example, U-Net or Mask R-CNN), and is obtained by performing machine learning on a neural network.

The person recognition model 84 is optimized by performing machine learning using second training data, which is a data set including a plurality of data (that is, a plurality of frames of data) in which second example data and second correct answer data are associated with each other.

The second example data is an image in which a person is shown (for example, a sample image assuming the second live view image 74B). The second correct answer data refers to correct answer data (that is, an annotation) for the second example data. That is, the second correct answer data is information for specifying a person shown in the image used as the second example data. An example of the second correct answer data is an annotation (for example, three-dimensional coordinates) that specifies the geometric characteristics (for example, the position, the size, and the shape) of the person.

The controller 40A1 inputs the second live view image 74B to the person recognition model 84 to cause the person recognition model 84 to generate and output a segmentation map 136. A coordinate system of the segmentation map 136 is the same coordinate system as the second live view image 74B. The segmentation map 136 includes a segmentation mask 136A that is information for specifying the person 14B. The controller 40A1 recognizes the person 14B shown in the second live view image 74B from the segmentation mask 136A in the segmentation map 136.

The controller 40A1 specifies an overlapping region between the person 14B and the foreground three-dimensional object 120. The overlapping region between the person 14B and the foreground three-dimensional object 120 is specified based on the segmentation mask 136A and the foreground three-dimensional object 120. Then, the controller 40A1 calculates information (for example, three-dimensional coordinates) for specifying an overlapping region between the segmentation mask 136A and the foreground three-dimensional object 120. Overlapping region specification information 138 is calculated based on three-dimensional coordinates for specifying the geometric characteristics of the segmentation mask 136A and three-dimensional coordinates for specifying the geometric characteristics of the foreground three-dimensional object 120.

The controller 40A1 cuts out an image region corresponding to the overlapping region specified from the overlapping region specification information 138 in a person image (that is, an image showing the person 14B) of the second live view image 74B included in the augmented reality image 112, erases an image region corresponding to the overlapping region specified from the overlapping region specification information 138 in the foreground three-dimensional object 120, and superimposes the image region cut out from the person image on the erased portion. The augmented reality image 112 obtained in this way is displayed on the screen 36A by the controller 40A1. That is, the augmented reality image 112 in a state where a region overlapping with the person 14B in the foreground three-dimensional object 120 is hidden by the person 14B is displayed on the screen 36A.

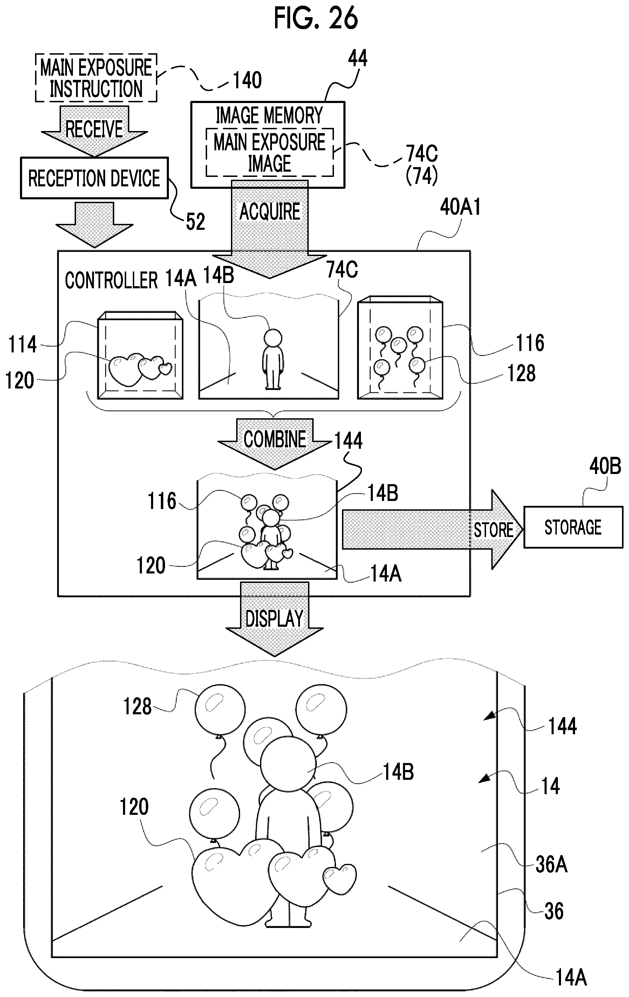

As shown in Fig. 26 as an example, in a case in which a main exposure instruction 140, which is an instruction to start main exposure, is received by the reception device 52 in a state where the augmented reality image 112 is displayed on the screen 36A, a main exposure image 74C is generated by performing the main exposure by the light receiver 22, and the main exposure image 74C is stored in the image memory 44. The main exposure image 74C is a type of the visible light image 74.

The controller 40A1 generates an augmented reality image 144 by replacing the second live view image 74B included in the augmented reality image 112 with the main exposure image 74C. The augmented reality image 144 is different from the augmented reality image 112 in that the second live view image 74B is replaced with the main exposure image 74C. The controller 40A1 outputs the augmented reality image 144 to a predetermined output destination. A first example of the predetermined output destination is a storage medium such as a memory card connected to the storage 40B or the external I/F 48. A second example of the predetermined output destination is the display 36. In the present embodiment, the augmented reality image 144 is stored in the storage 40B, and the augmented reality image 144 is displayed on the screen 36A.

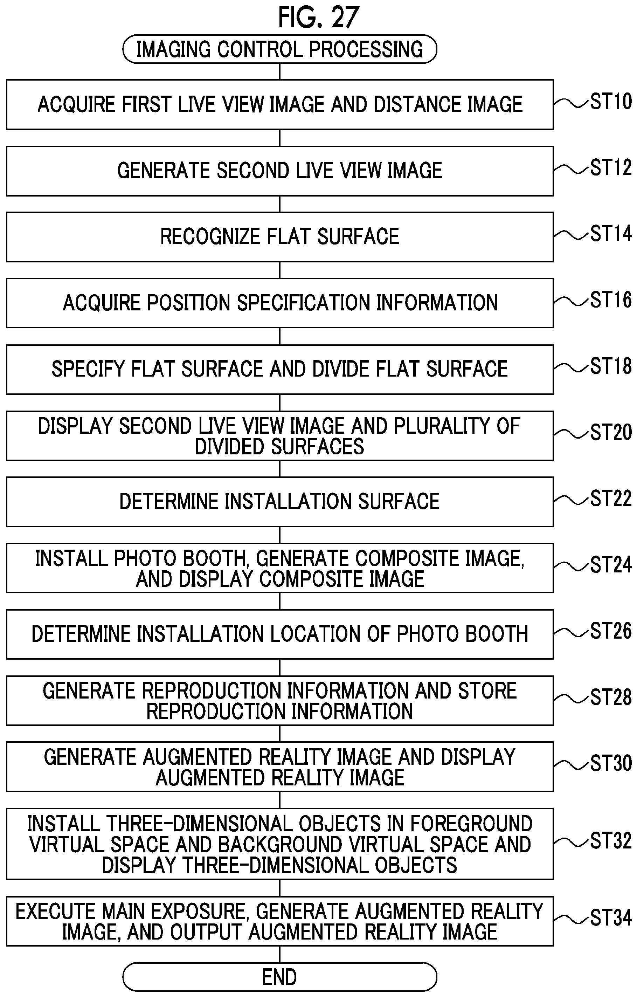

Next, a portion of the smart device 10 according to the present disclosure will be described with reference to Fig. 27. The imaging control processing shown in Fig. 27 is an example of an "image processing method" according to the present disclosure. In the following, for convenience of description, the description will be made on the premise that the first live view image 74A in which the flat surface 14A is shown and the main exposure image 74C in which the flat surface 14A and the person 14B are shown are selectively stored in the image memory 44, and the distance image 78 generated in synchronization with the first live view image 74A is stored in the image memory 44.

In the imaging control processing shown in Fig. 27, first, in step ST10, the controller 40A1 acquires the first live view image 74A and the distance image 78 from the image memory 44 (see Figs. 7 and 8). After the process of step ST10 is executed, the imaging control processing proceeds to step ST12.

In step ST12, the controller 40A1 generates the second live view image 74B based on the first live view image 74A and the distance image 78 (see Fig. 9). After the process of step ST12 is executed, the imaging control processing proceeds to step ST14.

In step ST14, the recognition unit 40A2 recognizes the flat surface 14A shown in the second live view image 74B by using the second live view image 74B and the flat surface recognition model 82 (see Fig. 9). In step ST14, the second live view image 74B is input to the flat surface recognition model 82, and the segmentation map 90 is generated by the flat surface recognition model 82 (see Fig. 9). After the process of step ST14 is executed, the imaging control processing proceeds to step ST16.

In step ST16, the recognition unit 40A2 generates the position specification information 92 based on the segmentation map 90 (see Fig. 10). After the process of step ST16 is executed, the imaging control processing proceeds to step ST18.

In step ST18, the controller 40A1 specifies the position of the flat surface 14A in the second live view image 74B based on the position specification information 92, and divides the flat surface 14A in the second live view image 74B (see Fig. 10). The flat surface 14A is divided to obtain the plurality of divided surfaces 94 (see Fig. 10). After the process of step ST18 is executed, the imaging control processing proceeds to step ST20.

In step ST20, the controller 40A1 displays the second live view image 74B and the plurality of divided surfaces 94 on the screen 36A (see Fig. 11). After the process of step ST20 is executed, the imaging control processing proceeds to step ST22.

In step ST22, the controller 40A1 determines the divided surface 94 selected by the user 12 from the plurality of divided surfaces 94 as the installation surface 100 (see Figs. 12 and 13). After the process of step ST22 is executed, the imaging control processing proceeds to step ST24.

In step ST24, the controller 40A1 generates the composite image 96 by installing the photo booth 98 on the installation surface 100 in the second live view image 74B, and displays the composite image 96 on the screen 36A (see Fig. 13). The installation position of the photo booth 98 can be changed in response to the booth change instruction 102 received by the reception device 52 (see Fig. 14). The photo booth 98 whose installation position is changed is displayed on the screen 36A (see Fig. 14). The geometric characteristics, the transparency, the color, and/or the pattern of the photo booth 98 in the composite image 96 are changed according to the content of the instruction given by the user 12 or the like. An example of the timing to be changed is a timing determined in accordance with the frame rate of the second live view image 74B. In this case, the change contents for changing the geometric characteristics, the transparency, the color, and/or the pattern of the photo booth 98 are reflected in the composite image 96 at a timing determined in accordance with the frame rate of the second live view image 74B. After the process of step ST24 is executed, the imaging control processing proceeds to step ST26.

In step ST26, the controller 40A1 determines the installation position of the photo booth 98 in the composite image 96 in accordance with the determination instruction 104 received by the reception device 52 (see Fig. 15). After the process of step ST26 is executed, the imaging control processing proceeds to step ST28.

In step ST28, the controller 40A1 generates the reproduction information 106 and stores the reproduction information 106 in the storage 40B (see Fig. 15). After the process of step ST28 is executed, the imaging control processing proceeds to step ST30.

The reproduction information 106 stored in the storage 40B is acquired from the storage 40B by the controller 40A1 in accordance with the reproduction instruction 108 received by the reception device 52, and is used for the reproduction of the photo booth 98 (see Fig. 16).

In step ST30, the controller 40A1 generates the augmented reality image 112 on a condition in which the decoration start instruction 110 is received by the reception device 52 in a state where the person 14B fits within the photo booth 98 shown in the composite image 96 (see Fig. 19). The controller 40A1 displays the augmented reality image 112 on the screen 36A. The augmented reality image 112 is an image obtained by combining the second live view image 74B with the foreground virtual space 114 and the background virtual space 116 determined based on the geometric characteristics of the photo booth 98. After the process of step ST30 is executed, the imaging control processing proceeds to step ST32.

In step ST32, the controller 40A1 displays the foreground three-dimensional object 120 and the background three-dimensional object 128 on the screen 36A by installing the foreground three-dimensional object 120 in the foreground virtual space 114 and installing the background three-dimensional object 128 in the background virtual space 116 (see Fig. 24). The geometric characteristics, the transparency, the color, and/or the pattern of the augmented reality image 112 (for example, the geometric characteristics, the transparency, the color, and/or the pattern of the foreground virtual space 114, the background virtual space 116, the foreground three-dimensional object 120, and/or the background three-dimensional object 128) is changed according to the content of the instruction given by the user 12 or the like. An example of the timing to be changed is a timing determined in accordance with the frame rate of the second live view image 74B. Examples of the instruction given by the user 12 or the like for changing the geometric characteristics, the transparency, the color, and/or the pattern of the augmented reality image 112 include the foreground change instruction 124 and the background change instruction 132. For example, the change contents of the foreground change instruction 124 and the background change instruction 132 are reflected in the augmented reality image 112 (for example, the foreground three-dimensional object 120 and the background change instruction 132) at a timing determined in accordance with the frame rate of the second live view image 74B. After the process of step ST32 is executed, the imaging control processing proceeds to step ST34.

In step ST34, the controller 40A1 causes the light receiver 22 to execute the main exposure on a condition in which the main exposure instruction 140 is received by the reception device 52 in a state where the augmented reality image 112 is displayed on the screen 36A. Then, the controller 40A1 generates the augmented reality image 144 by replacing the second live view image 74B included in the augmented reality image 112 with the main exposure image 74C, and outputs the augmented reality image 144 to the predetermined output destination (see Fig. 26). After the process of step ST34 is executed, the imaging control processing ends.

As described above, in the present embodiment, the composite image 96 in which the second live view image 74B whose geometric characteristics are defined by the three-dimensional coordinates 86 including the distance measured by the TOF camera 76 and the photo booth 98 whose geometric characteristics are defined in three dimensions based on the three-dimensional coordinates 86 are combined is displayed on the screen 36A. The composite image 96 is an image realized by augmented reality. Since the composite image 96 includes the photo booth 98 defined in three dimensions, the user 12 can guide the person 14B into the photo booth 98. The person 14B fits within the photo booth 98 defined in three dimensions, whereby it is easy to perform three-dimensional decoration on the foreground and background of the person 14B in the second live view image 74B. As described above, according to the present embodiment, it is possible to provide the user 12 with an image that is useful for the three-dimensional decoration.

In addition, in the present embodiment, the photo booth 98 is updated accordingly in a case in which the second live view image 74B is obtained. Accordingly, the photo booth 98 can be reinstalled at an appropriate position in the composite image 96 accordingly in a case in which the second live view image 74B is obtained, compared to a case in which the photo booth 98 is always positioned at the same location in the composite image 96.

In addition, in the present embodiment, in the composite image 96, the photo booth 98 is positioned on the installation surface 100 that is determined based on the flat surface 14A shown in the second live view image 74B. Accordingly, the photo booth 98 can be easily installed in the composite image 96.

In addition, in the present embodiment, the installation position of the photo booth 98 in the composite image 96 is determined on a condition in which the determination instruction 104 is received by the reception device 52. Accordingly, the installation position of the photo booth 98 in the composite image 96 can be determined at a timing intended by the user 12.

In addition, in the present embodiment, in a case in which the installation position of the photo booth 98 in the composite image 96 is determined, the reproduction information 106 is stored in the storage 40B, and the photo booth 98 is reproduced based on the reproduction information 106 stored in the storage 40B in response to the reproduction instruction 108. Accordingly, the photo booth 98 obtained in the past can be reused.

In addition, in the present embodiment, among the plurality of divided surfaces 94 obtained by dividing the flat surface 14A, the divided surface 94 selected in response to the instruction from the user 12 is set as the installation surface 100, and the photo booth 98 is installed on the installation surface 100. Accordingly, the photo booth 98 can be installed at a position intended by the user 12.

In addition, in the present embodiment, the flat surface 14A is recognized by performing the flat surface recognition processing using the flat surface recognition model 82 on the second live view image 74B. Accordingly, the flat surface 14A is easily specified compared to a case in which the flat surface 14A is specified by the user 12 from the second live view image 74B by visual observation.

In addition, in the present embodiment, the geometric characteristics of the photo booth 98 in the composite image 96 are changed by the booth change instruction 102. Accordingly, it is possible to install the photo booth 98 having the geometric characteristics close to the geometric characteristics intended by the user 12 in the composite image 96, compared to a case in which the geometric characteristics of the photo booth 98 are always the same.

In addition, in the present embodiment, the augmented reality image 112 in which the second live view image 74B defined in three dimensions, the foreground virtual space 114, and the background virtual space 116 are combined is displayed on the screen 36A. The foreground three-dimensional object 120 is installed in the foreground virtual space 114. As a result, the foreground three-dimensional object 120 is displayed on the screen 36A. In addition, the background three-dimensional object 128 is installed in the background virtual space 116. As a result, the background three-dimensional object 128 is displayed on the screen 36A. Therefore, it is possible to provide the user 12 with an image in which the three-dimensional decoration is applied to the foreground and the background of the person 14B.

In addition, in the present embodiment, the foreground three-dimensional object 120 is changed in response to the foreground change instruction 124, and the background three-dimensional object 128 is changed in response to the background change instruction 132. Accordingly, the decoration of the foreground of the person 14B and the decoration of the background of the person 14B can be made to be the decoration intended by the user 12.

In addition, in the present embodiment, in a case in which the occlusion instruction 134 is received by the reception device 52, the person 14B shown in the second live view image 74B and the foreground three-dimensional object 120 are represented by the occlusion based on the three-dimensional coordinates 86. As a result, it is possible to provide a visually realistic sense of relationship between the person 14B existing in a real space and the foreground three-dimensional object 120.

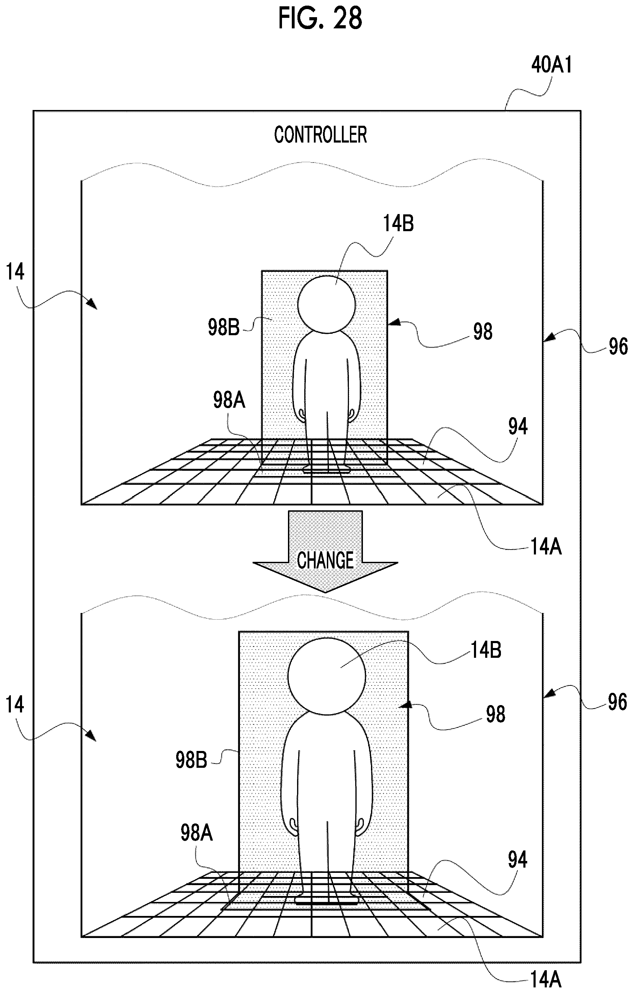

In the above-described embodiment, a form example in which the geometric characteristics of the photo booth 98 are changed in response to the booth change instruction 102 received by the reception device 52 has been described, but this is merely an example, and the geometric characteristics of the photo booth 98 may be changed according to the state of the subject 14. For example, as shown in Fig. 28, in a case in which the person 14B that fits within the photo booth 98 is changed from a first person to a second person having a larger body size than the first person, the geometric characteristics (in the example shown in Fig. 28, the size) of the photo booth 98 may be changed in accordance with the body size of the second person. In addition, the geometric characteristics of the photo booth 98 may be changed according to the pose of the person 14B. For example, the size of the photo booth 98 may be changed depending on whether the person 14B is sitting or standing. For example, the size of the photo booth 98 need only be made larger in a state in which the person 14B is standing than in a state in which the person 14B is sitting. In addition, the photo booth 98 may follow the person 14B as the person 14B moves. In addition, the brightness, color, color density, and/or transparency of the photo booth 98 may be changed according to the brightness of the subject 14. In this way, it is possible to provide the user 12 with the composite image 96 including the photo booth 98 according to the state of the subject 14.

In the above-described embodiment, the person 14B is exemplified as the main subject, but a subject other than the person 14B may be the main subject. In this case, the main subject may fit within the photo booth 98. In addition, in this case, instead of the above-described person recognition processing, physical object recognition processing in which a main subject other than the person is recognized need only be executed.

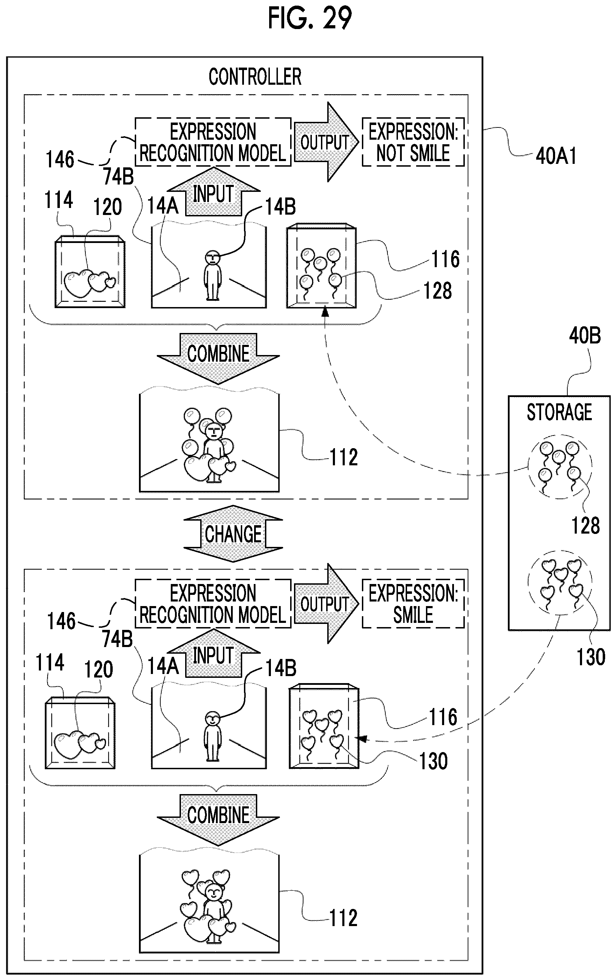

In the above-described embodiment, a form example in which the foreground three-dimensional object 120 is changed in response to the foreground change instruction 124 and the background three-dimensional object 128 is changed in response to the background change instruction 132 has been described, but this is merely an example, and the foreground three-dimensional object 120 and/or the background three-dimensional object 128 may be changed according to the state of the subject 14. For example, as shown in Fig. 29, the background three-dimensional object 128 may be changed according to an expression of the person 14B. In this case, for example, expression recognition processing using an expression recognition model 146, which is a trained model obtained by training the neural network using various expressions of the person 14B through machine learning, is performed by the controller 40A1. In the expression recognition processing, the controller 40A1 inputs the second live view image 74B to the expression recognition model 146 to cause the expression recognition model 146 to recognize the expression of the person 14B shown in the second live view image 74B. Then, the controller 40A1 disposes a background three-dimensional object corresponding to the expression recognized by the expression recognition model 146 in the background virtual space 116.

For example, a plurality of background three-dimensional objects including the background three-dimensional objects 128 and 130 are stored in the storage 40B, and the controller 40A1 acquires the background three-dimensional object corresponding to the expression of the person 14B from the storage 40B and disposes the background three-dimensional object in the background virtual space 116. In the example shown in Fig. 29, in a case in which the expression of the person 14B is not a smile, the controller 40A1 acquires the background three-dimensional object 128 from the storage 40B and disposes the background three-dimensional object 128 in the background virtual space 116. In addition, in the example shown in Fig. 29, in a case in which the expression of the person 14B is a smile, the controller 40A1 acquires the background three-dimensional object 130 from the storage 40B and disposes the background three-dimensional object 130 in the background virtual space 116.

In addition, in a case in which the person 14B that fits within the photo booth 98 is changed from a first person to a second person having a larger body size than the first person, the geometric characteristics of the background three-dimensional object 128 may be changed in accordance with the body size of the second person. In addition, the geometric characteristics of the background three-dimensional object 128 may be changed according to the pose of the person 14B. For example, the size, position, and/or shape of the background three-dimensional object 128 may be changed depending on whether the person 14B is sitting or standing. In addition, the background three-dimensional object 128 may follow the person 14B as the person 14B moves. In addition, the brightness, color, color density, and/or transparency of the background three-dimensional object 128 may be changed according to the brightness of the subject 14.

In this way, it is possible to provide the user 12 with the augmented reality image 112 including the background three-dimensional object according to the state of the subject 14. Here, although a form example in which the background three-dimensional object 128 is changed according to the state of the subject 14 has been described, the same can be said for the foreground three-dimensional object.

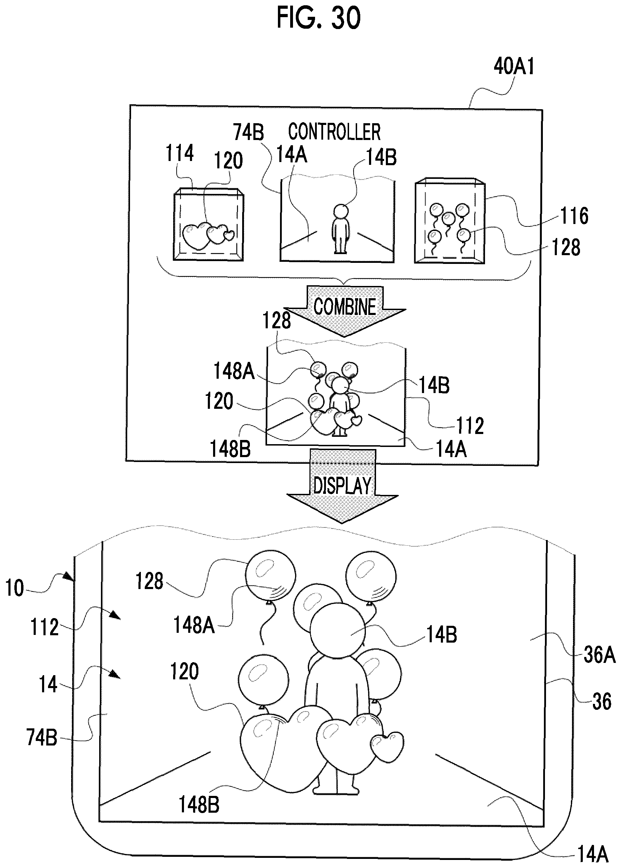

In the above-described embodiment, the pseudo-optical characteristics by which the background three-dimensional object 128 and the foreground three-dimensional object 120 mutually influence are not mentioned, but the pseudo-optical characteristics (for example, specular reflection and/or projection) by which the background three-dimensional object 128 and the foreground three-dimensional object 120 mutually influence may be represented in the background three-dimensional object 128 and the foreground three-dimensional object 120. For example, as shown in Fig. 30, pseudo gloss 148A of the background three-dimensional object 128 may be projected onto the foreground three-dimensional object 120 as pseudo gloss 148B. Such pseudo-optical characteristics are realized by CG. As described above, the pseudo-optical characteristics by which the background three-dimensional object 128 and the foreground three-dimensional object 120 mutually influence are represented in the background three-dimensional object 128 and the foreground three-dimensional object 120, thereby giving a sense of optical reality to the three-dimensional object decorated in the foreground and the background of the person 14B.

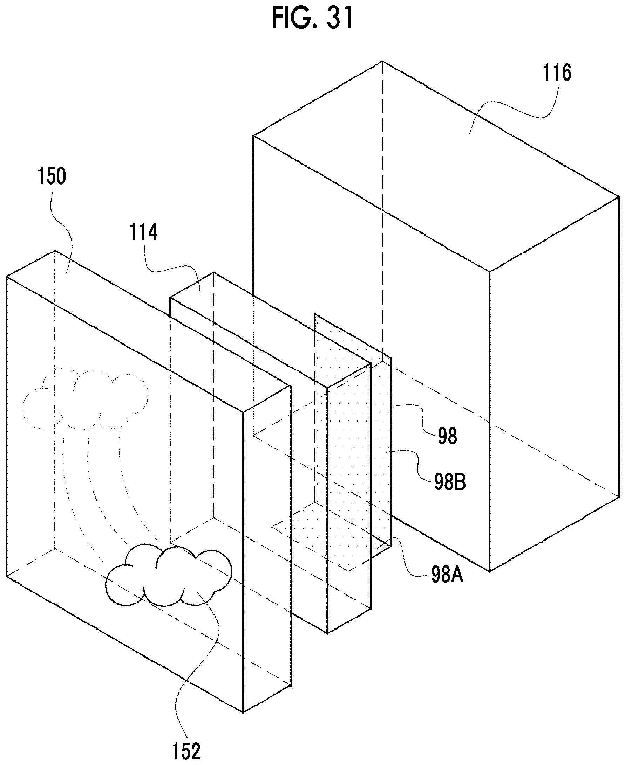

In the above-described embodiment, a form example in which the foreground virtual space 114 is installed in front of the photo booth 98 and the background virtual space 116 is installed behind the photo booth 98 has been described, but this is merely an example. For example, as shown in Fig. 31, the foremost virtual space 150 may be installed in front of the foreground virtual space 114. As with the foreground virtual space 114 and the background virtual space 116, the foremost virtual space 150 is also a virtual space determined based on the geometric characteristics of the photo booth 98 and is defined in the same coordinate system as the photo booth 98.

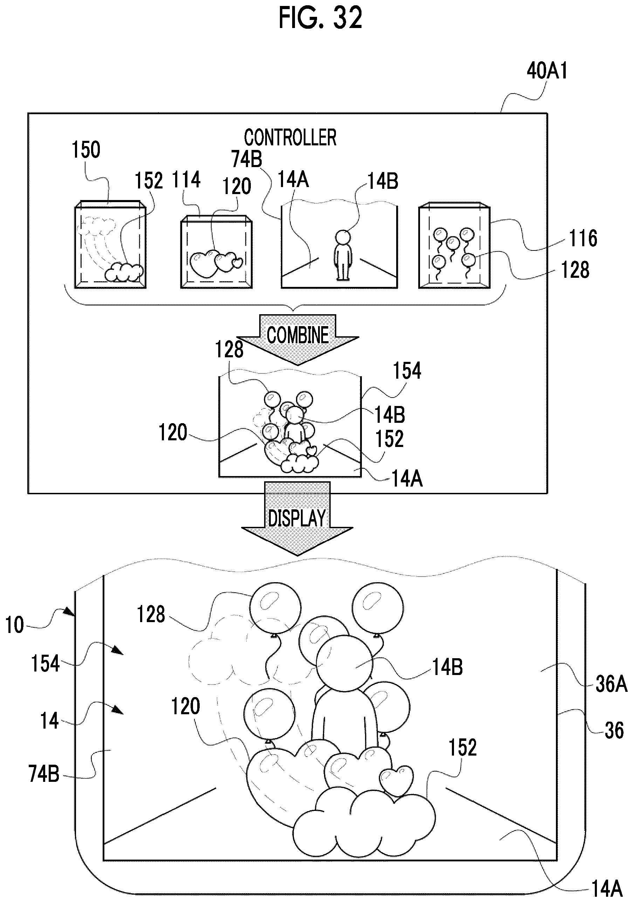

As shown in Figs. 31 and 32 as an example, a dynamic three-dimensional object 152, which is a three-dimensional object that is dynamically represented, is installed in the foremost virtual space 150. The dynamic three-dimensional object 152 is realized by CG and moves in the foremost virtual space 150. The controller 40A1 generates an augmented reality image 154 by combining the dynamic three-dimensional object 152 installed in the foremost virtual space 150, the foreground three-dimensional object 120 installed in the foreground virtual space 114, the second live view image 74B, and the background three-dimensional object 128 installed in the background virtual space 116. The controller 40A1 displays the augmented reality image 154 on the screen 36A. In this way, the user 12 can visually recognize the augmented reality image 154 in which the foreground of the person 14B is decorated with the dynamically represented three-dimensional object.

In the examples shown in Figs. 31 and 32, a form example in which the dynamic three-dimensional object 152 is installed in the foremost virtual space 150 has been described, but this is merely an example, and the dynamic three-dimensional object 152 may be installed in a virtual space surrounding the foreground virtual space 114, the person 14B, and the background virtual space 116. In this case, occlusion (for example, occlusion between the dynamic three-dimensional object 152 and the foreground three-dimensional object 120, occlusion between the dynamic three-dimensional object 152 and the person 14B, and occlusion between the dynamic three-dimensional object 152 and the background three-dimensional object 128) may be realized in the same manner as the above-described occlusion processing, depending on a positional relationship among the dynamic three-dimensional object 152, the foreground three-dimensional object 120, the person 14B, and the background three-dimensional object 128.

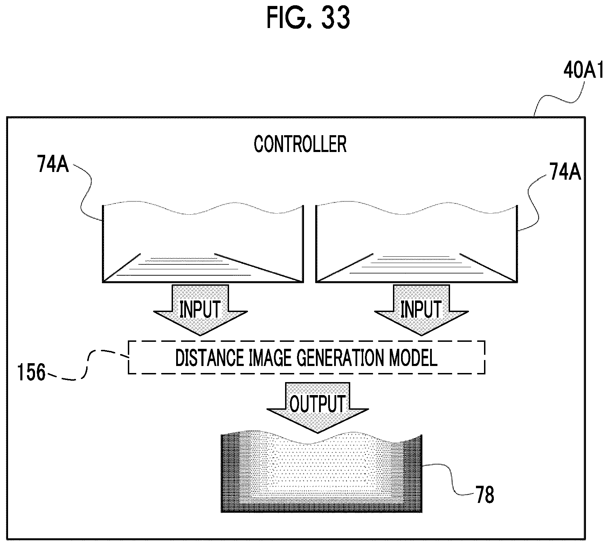

In the above-described embodiment, a form example in which the distance image 78 is generated based on the distance measurement result of the TOF camera 76 has been described, but this is merely an example, and the distance image 78 may be generated by performing image analysis on a plurality of first live view images 74A. For example, as shown in Fig. 33, the controller 40A1 may cause a distance image generation model 156 to generate the distance image 78. The distance image generation model 156 is a trained generation model obtained by training, through machine learning, a neural network using training data in which a plurality of images obtained by capturing images from a plurality of positions are used as example data and a distance image showing a distribution of a distance from an imaging position (for example, one position among the plurality of positions) to a subject is used as correct answer data. The controller 40A1 inputs a plurality of first live view images 74A (in the example shown in Fig. 33, images of two frames) obtained by capturing images at a plurality of positions to the distance image generation model 156 to cause the distance image generation model 156 to generate the distance image 78.

In the example shown in Fig. 33, a form example in which the distance image 78 is generated by the generative AI model is shown, but this is merely an example, and the distance image 78 may be generated by a non-AI method. In this case, for example, the distance from the imaging position to the subject 14 may be measured by stereo matching using a plurality of first live view images 74A (for example, images of two frames) obtained by capturing images at a plurality of positions, and the distance image 78 may be generated based on the measurement result. In addition, the distance image 78 may be generated based on a distance measurement result obtained by performing distance measurement using a phase difference method using phase difference pixels.

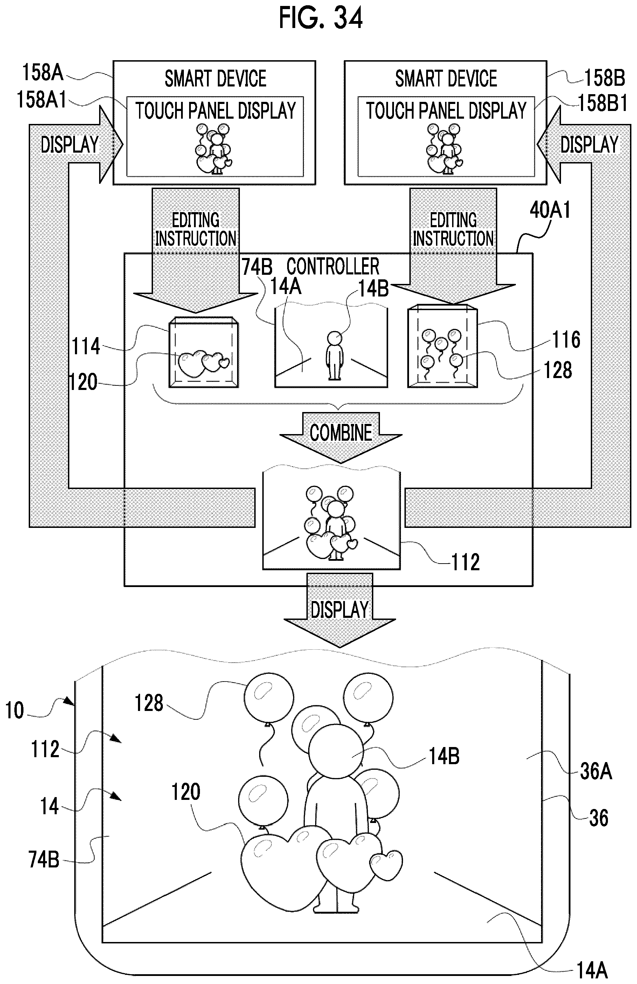

In the above-described embodiment, a form example in which the foreground three-dimensional object 120 is changed or the background three-dimensional object 128 is changed in response to the instruction received by the reception device 52 of the smart device 10 has been described, but this is merely an example. For example, as shown in Fig. 34, the foreground three-dimensional object 120 and the background three-dimensional object 128 may be changed in response to instructions received by smart devices 158A and 158B that are communicably connected to the smart device 10. In the example shown in Fig. 34, the smart devices 158A and 158B are examples of a "plurality of terminal devices" according to the present disclosure.

In the example shown in Fig. 34, the smart device 158A comprises a touch panel display 158A1, and the smart device 158B comprises a touch panel display 158B1. The augmented reality image 112 is displayed on the touch panel displays 158A1 and 158B1. A user of the smart device 158A gives an editing instruction, which is an example of a processing execution instruction according to the technology of the present disclosure, to the smart device 158A via the touch panel display 158A1 while observing the augmented reality image 112 displayed on the touch panel display 158A1. The controller 40A1 edits the foreground three-dimensional object 120 in response to the editing instruction given to the smart device 158A. Meanwhile, a user of the smart device 158B gives an editing instruction, which is an example of a processing execution instruction according to the technology of the present disclosure, to the smart device 158B via the touch panel display 158B1 while observing the augmented reality image 112 displayed on the touch panel display 158B1. The controller 40A1 edits the background three-dimensional object 128 in response to the editing instruction given to the smart device 158B. In this way, the users of the smart devices 158A and 158B can simultaneously edit the augmented reality image 112.

Here, although a form example in which the foreground three-dimensional object 120 and the background three-dimensional object 128 are edited has been described, the geometric characteristics of the foreground virtual space 114 and/or the geometric characteristics of the background virtual space 116 may be changed in response to the instruction given to the smart device 158A and/or 158B. In addition, the geometric characteristics of the foremost virtual space 150 and/or the dynamic three-dimensional object 152 may be changed in response to the instruction given to the smart device 158A, the smart device 158B, or a smart device other than these.

In addition, in a case in which a plurality of the foreground virtual spaces 114 are present, one smart device may be associated with each foreground virtual space 114, and processing (for example, editing) may be performed on the corresponding foreground virtual space 114 and the foreground three-dimensional object 120 in the corresponding foreground virtual space 114 in response to the instruction received by each smart device. The same applies to a case in which a plurality of the background virtual spaces 116 are present.

In addition, in the example shown in Fig. 34, although a form example in which both the smart device 158A and the smart device 158B are communicably connected to the smart device 10 has been described, the smart device 158A or 158B may be communicably connected to the smart device 10.

In a state in which the augmented reality image 112 is displayed on the touch panel display 158A1 of the smart device 158A, on a condition in which an imaging instruction from the user or the like of the smart device 158A (for example, a subject being captured by the smart device 10 using a live view method) is received by the touch panel display 158A1, a processor of the smart device 158A may cause the smart device 10 to perform main exposure for imaging for recording. The same can also be achieved by a terminal other than the smart device 158A (for example, a terminal that is communicably connected to the smart device 10 and has an imaging function, a display function, and a reception function, such as the smart device 158B). Here, the concept of the "terminal" also includes a printer having an imaging function, a display function, and a reception function.

**In** addition, in a case in which an editing instruction is received from the user or the like of the smart device 158A (for example, a subject being captured by the smart device 10 using a live view method) in a state in which the augmented reality image 112 is displayed on the touch panel display 158A1 of the smart device 158A, the processor of the smart device 158A may control the smart device 10 so that the decoration of the augmented reality image 112 displayed on the touch panel display 158A1 is edited in response to the editing instruction. The same can also be achieved by a terminal other than the smart device 158A (for example, a terminal that is communicably connected to the smart device 10 and has an imaging function, a display function, and a reception function, such as the smart device 158B). Here, the concept of the "terminal" also includes a printer having an imaging function, a display function, and a reception function.

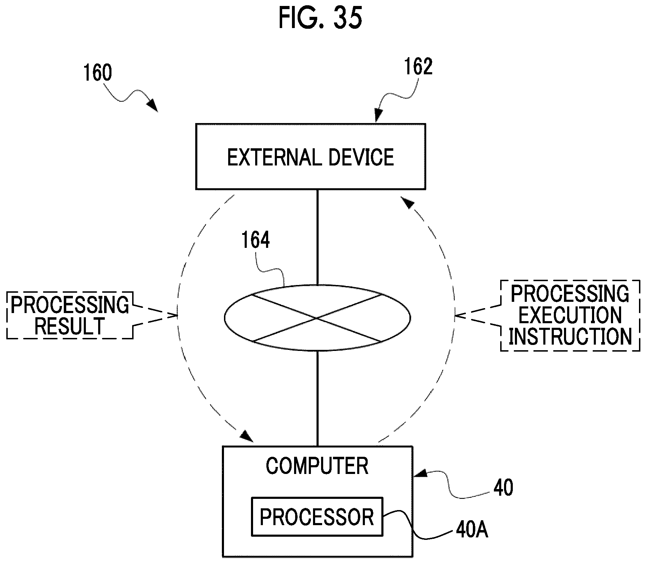

**In** the above-described embodiment, a form example in which the imaging control processing is performed by the computer 40 has been described, but the present disclosure is not limited to this. At least a part of processing included in the imaging control processing may be performed by a device provided outside the computer 40. Hereinafter, an example of this case will be described with reference to Fig. 35.

Fig. 35 is a conceptual diagram showing an example of a configuration of an imaging system 160. **In** the example shown in Fig. 35, the imaging system 160 is an example of an "imaging apparatus" according to the present disclosure.

The imaging system 160 comprises the computer 40 and an external device 162. For example, the external device 162 is a server and is communicably connected to the computer 40 via a network 164 (for example, a WAN and/or a LAN). Although a server is exemplified here, at least one personal computer or the like may be used as the external device 162 instead of the server.

An example of the external device 162 is at least one server that directly or indirectly transmits data to or receives data from the computer 40 via the network 164. The external device 162 receives a processing execution instruction given by the processor 40A of the computer 40 via the network 164. Then, the external device 162 executes processing according to the received processing execution instruction and transmits a processing result to the computer 40 via the network 164. **In** the computer 40, the processor 40A receives the processing result transmitted from the external device 162 via the network 164 and executes processing using the received processing result.

Examples of the processing execution instruction include an instruction to cause the external device 162 to execute at least a part of the imaging control processing. A first example of at least the part of the imaging control processing (that is, processing executed by the external device 162) is flat surface recognition processing. In this case, the external device 162 executes the flat surface recognition processing in response to the processing execution instruction given by the processor 40A via the network 164, and transmits a first processing result, which is a processing result of the flat surface recognition processing, to the computer 40 via the network 164. In the computer 40, the processor 40A receives the first processing result and executes the same processing as that in the above-described embodiment using the received first processing result.

A second example of at least the part of the imaging control processing (that is, processing executed by the external device 162) is processing of the controller 40A1. In this case, the external device 162 executes the processing of the controller 40A1 in response to the processing execution instruction given by the processor 40A via the network 164, and transmits a second processing result (for example, the composite image 96, the processing result of the person recognition processing, the augmented reality image 112, and the augmented reality image 144) to the computer 40 via the network 164. In the computer 40, the processor 40A receives the second processing result and executes processing using the received second processing result.

In addition, the external device 162 may be implemented by cloud computing. The cloud computing is merely an example, and the external device 162 may be implemented by network computing such as fog computing, edge computing, or grid computing.

In the above-described embodiment, a form example in which the imaging control program 80 is stored in the storage 40B has been described, but the present disclosure is not limited to this. For example, the imaging control program 80 may be stored in a portable computer-readable non-transitory storage medium such as an SSD or a USB flash drive. The imaging control program 80 stored in the non-transitory storage medium is installed in the computer 40 of the smart device 10. The processor 40A executes the imaging control processing in accordance with the imaging control program 80.

In addition, the imaging control program 80 may be stored in a storage device such as another computer or a server connected to the smart device 10 via a network, and the imaging control program 80 may be downloaded in response to a request from the smart device 10 and installed in the computer 40.

It is not necessary to store the entirety of the imaging control program 80 in a storage device such as another computer or a server device connected to the smart device 10 or to store the entirety of the imaging control program 80 in the storage 40B, and a part of the imaging control program 80 may be stored.

As a hardware resource that executes the imaging control processing, various processors described below can be used. Examples of the processor include a CPU which is a general-purpose processor functioning as the hardware resource for executing the imaging control processing by executing software, that is, a program. In addition, examples of the processor include a dedicated electric circuit which is a processor having a circuit configuration designed to be dedicated to executing specific processing, such as an FPGA, a PLD, or an ASIC. A memory is built in or connected to each processor, and each processor uses the memory to execute the imaging control processing.

The hardware resource for executing the imaging control processing may be configured of one of the various processors or may be configured of a combination of two or more processors of the same type or different types (for example, combination of a plurality of FPGAs or combination of CPU and FPGA). In addition, the hardware resource for executing the imaging control processing may be one processor.

As a configuring example of one processor, first, there is a form in which one processor is configured of a combination of one or more CPUs and software and the processor functions as the hardware resource for executing the imaging control processing. Secondly, as typified by an SoC, there is a form in which a processor that realizes functions of the entire system including the plurality of hardware resources for executing the imaging control processing with one IC chip is used. As described above, the imaging control processing is realized by using one or more of various processors as the hardware resource.

As a hardware structure of these various processors, more specifically, an electric circuit in which circuit elements such as semiconductor elements are combined can be used. In addition, the above imaging control processing is merely an example. Accordingly, it is possible to delete an unnecessary step, add a new step, or change a processing order without departing from the gist of the present disclosure.

The above-described contents and the above-shown contents are the detailed description of the parts according to the present disclosure, and are merely examples of the present disclosure. For example, description related to the above configurations, functions, actions, and effects is description related to an example of configurations, functions, actions, and effects of the parts relating to the present disclosure. Thus, it is needless to say that unnecessary parts may be deleted, new elements may be added, or replacement may be made to the content of the above description and the content of the drawings without departing from the gist of the present disclosure. In addition, in order to avoid complications and facilitate understanding of the parts according to the present disclosure, the description of common technical knowledge or the like, which does not particularly require the description for enabling the implementation of the present disclosure, is omitted in the above-described contents and the above-shown contents.

All documents, patent applications, and technical standards mentioned in the present specification are incorporated herein by reference to the same extent as in a case in which each document, each patent application, and each technical standard are specifically and individually described by being incorporated by reference.

The following appendices are further disclosed with respect to the above embodiment.

### Appendix 1

A communication apparatus that is communicable with an imaging apparatus that generates a live view image by imaging a subject and that decorates the live view image with augmented reality, the communication apparatus comprising:
a receiving unit configured to receive a decorated live view image obtained by decorating the live view image using the imaging apparatus from the imaging apparatus through communication with the imaging apparatus; and
a screen configured to display the decorated live view image received by the receiving unit.

### Appendix 2

The communication apparatus according to Appendix 1, further comprising:
a first reception unit configured to receive an imaging instruction; and
an imaging controller configured to cause the imaging apparatus to perform imaging for obtaining a still image corresponding to the decorated live view image displayed on the screen on a condition in which the imaging instruction is received by the first reception unit in a state where the decorated live view image is displayed on the screen.

### Appendix 3

The communication apparatus according to Appendix 1 or 2, further comprising:
a second reception unit configured to receive an editing instruction; and
a decoration controller configured to, in a case where the editing instruction is received by the second reception unit in a state where the decorated live view image is displayed on the screen, control the imaging apparatus such that the decoration of the decorated live view image displayed on the screen is edited in accordance with the editing instruction.

### Appendix 4

The communication apparatus according to any one of Appendices 1 to 3,
in which the communication apparatus is used by the subject.

### Appendix 5

The communication apparatus according to any one of Appendices 1 to 4,
in which the communication apparatus is a smart device or a printer.

## Claims

1. An image processing device (40) comprising:
a processor (40A),
wherein the processor (40A) is configured to
acquire distance information (78) related to a distance from an imaging apparatus (10, 160) to a subject (14), and
output a composite image (96) obtained by combining a live view image (74B) obtained by capturing the subject (14) with the imaging apparatus (10, 160) and an object (98) defined in three dimensions based on at least the distance information (78).

2. The image processing device (40) according to claim 1,
wherein a reference surface (14A) included in the subject (14) is shown in the live view image (74B), and
the composite image (96) is an image in which the object (98) is positioned on an installation surface (100) determined based on the reference surface (14A).

3. The image processing device (40) according to claim 2,
wherein an installation location of the object (98) is determined according to a received operation (104).

4. The image processing device (40) according to claim 2 or 3,
wherein the installation surface (100) is a divided surface (94) selected in accordance with a given instruction among a plurality of divided surfaces (94) obtained by dividing the reference surface (14A).

5. The image processing device (40) according to any one of claims 2 to 4,
wherein the reference surface (14A) is recognized by performing physical object recognition processing on the live view image (74B).

6. The image processing device (40) according to any one of claims 5,
wherein the reference surface (14A) is a surface having a feature recognized by performing the physical object recognition processing on the live view image (74B).

7. The image processing device (40) according to any one of claims 1 to 6,
wherein the object (98) in the composite image (96) is changed according to a first condition.

8. The image processing device (40) according to claim 7,
wherein the first condition includes a first change instruction (102) that is an instruction to change the object.

9. The image processing device (40) according to claim 7 or 8,
wherein the first condition includes a state of the subject shown in the live view image.

10. The image processing device (40) according to any one of claims 1 to 9,
wherein the processor (40A) is configured to output an augmented reality image (112),
the augmented reality image (112) is an image obtained by combining the live view image (74B) and at least one virtual space (116) determined based on a geometric characteristic of the object (98), and
the virtual space (116) includes a virtual three-dimensional object (120, 128).

11. The image processing device (40) according to claim 10,
wherein the three-dimensional object (120, 128) is changed according to a second condition.

12. The image processing device (40) according to claim 11,
wherein the second condition includes a second change instruction (132) that is an instruction to change the three-dimensional object (120, 128).

13. The image processing device (40) according to claim 11 or 12,
wherein the second condition includes a state of the subject (14) shown in the live view image (74B).

14. The image processing device (40) according to any one of claims 10 to 13,
wherein the augmented reality image (112) includes, as the virtual space (116), one or more background virtual spaces (116) in which a background of a physical object (14B) shown in the live view image (74B) is representable and one or more foreground virtual spaces (114) in which a foreground of the physical object (14B) shown in the live view image (74B) is representable,
the one or more background virtual spaces (116) include a background three-dimensional object (128) as the three-dimensional object (120, 128), and
the one or more foreground virtual spaces (114) include a foreground three-dimensional object (120) as the three-dimensional object (120, 128).

15. The image processing device (40) according to claim 14,
wherein pseudo-optical characteristics by which the background three-dimensional object (128) and the foreground three-dimensional object (120) mutually influence are represented in the background three-dimensional object (128) and the foreground three-dimensional object (120).

16. The image processing device (40) according to any one of claims 10 to 15,
wherein a physical object (14B) shown in the live view image (74B) and the three-dimensional object (120, 128) are represented by occlusion based on the distance information (78).

17. The image processing device (40) according to any one of claims 10 to 16,
wherein processing is executed on the virtual space (116) and/or the three-dimensional object (120, 128) in response to a processing execution instruction given by each of a plurality of terminal devices (158A, 158B).

18. The image processing device (40) according to any one of claims 1 to 17,
wherein the output of the composite image (96) is realized by displaying the composite image (96) on a screen (36A).

19. The image processing device (40) according to any one of claims 1 to 18,
wherein reproduction information (106) for reproducing an image including the object (98) is stored in a storage medium (40B), and
in a case in which a reproduction condition is satisfied, the image including the object (98) is reproduced based on the reproduction information (106) stored in the storage medium (40B).

20. The image processing device (40) according to any one of claims 1 to 19,
wherein the distance information (78) is obtained by performing image analysis on an image (74A) obtained by capturing the subject (14) with the imaging apparatus (10, 160).

21. An image processing method comprising:
acquiring distance information (78) related to a distance from an imaging apparatus (10, 160) to a subject (14); and
outputting a composite image (96) obtained by combining a live view image (74B) obtained by capturing the subject (14) with the imaging apparatus (10, 160) and an object (98) defined in three dimensions based on at least the distance information (78).

22. A storage medium (40B) storing a program (80) executable by a computer (40) to execute:
acquiring distance information (78) related to a distance from an imaging apparatus (10, 160) to a subject (14); and
outputting a composite image (96) obtained by combining a live view image (74B) obtained by capturing the subject (14) with the imaging apparatus (10, 160) and an object (98) defined in three dimensions based on at least the distance information (78).
